(19) Europäisches Patentamt
European Patent Office
Office européen des brevets

(11) **EP 3 581 395 B1**

(12) **EUROPÄISCHE PATENTSCHRIFT**

(45) Veröffentlichungstag und Bekanntmachung des Hinweises auf die Patenterteilung:
**23.10.2024   Patentblatt 2024/43**

(21) Anmeldenummer: **19182346.7**

(22) Anmeldetag: **09.09.2010**

(51) Internationale Patentklassifikation (IPC):
**B42D 25/29** *(2014.01)*   **B42D 25/324** *(2014.01)*
**B42D 25/328** *(2014.01)*   **B42D 25/351** *(2014.01)*
**B42D 25/36** *(2014.01)*   **B42D 25/45** *(2014.01)*
**G02B 3/00** *(2006.01)*

(52) Gemeinsame Patentklassifikation (CPC):
**B42D 25/45; B42D 25/29; B42D 25/324;**
**B42D 25/328; B42D 25/351; B42D 25/36;**
**G02B 3/005; G02B 3/0056;** B42D 2033/04;
B42D 2033/10; B42D 2033/14; B42D 2033/18;
B42D 2035/44

(54) **MEHRSCHICHTKÖRPER**

MULTILAYER BODY

CORPS MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **11.09.2009   DE 102009040975**

(43) Veröffentlichungstag der Anmeldung:
**18.12.2019   Patentblatt 2019/51**

(62) Dokumentnummer(n) der früheren Anmeldung(en) nach Art. 76 EPÜ:
**10757030.1 / 2 475 529**

(73) Patentinhaber: **OVD Kinegram AG**
**6300 Zug (CH)**

(72) Erfinder:
 • SCHILLING, Andreas
  6332 Hagendorn (ZG) (CH)
 • TOMPKIN, Wayne Robert
  verstorben (CH)
 • HANSEN, Achim
  6300 Zug (CH)

(74) Vertreter: **Louis Pöhlau Lohrentz**
**Patentanwälte**
**Postfach 30 55**
**90014 Nürnberg (DE)**

(56) Entgegenhaltungen:
WO-A2-2005/106601    DE-A1-102006005000
DE-A1-102007007914    DE-A1-102007049512

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Mehrschichtkörper, welcher insbesondere als Sicherheitselement zur Sicherung von Sicherheitsdokumenten, insbesondere Banknoten, als Sicherheitsdokument, z.B. Banknoten, Wertdokumente oder ID-Dokumente, zur Produktsicherung oder für Verpackungsanwendungen eingesetzt werden kann.

Es ist bekannt, Moiré-Effekte als Sicherheitsmerkmale zur Sicherung von Sicherheitsdokumenten einzusetzen. So beschreibt beispielsweise die EP 1 238 373 B1 ein Verfahren, bei dem durch Übereinanderlegen eines Hauptrasters und eines Grundrasters ein charakteristisches Moiré-Intensitätsprofil erzielt werden kann. Die durch Übereinanderlegen des Haupt- und des Grundrasters entstehende "verborgene Information" ist hierbei in die Formgestaltung der einzelnen Rasterelemente des Grund- und des Hauptrasters codiert. Durch Verschieben des Grund- und des Hauptrasters gegeneinander entsteht hierbei für den menschlichen Betrachter ein optisch variierender Eindruck.

DE 10 2007 007 914 A1 betrifft einen Prägelack für mikrooptische Sicherheitselemente.

WO 2005/106601 A2 betrifft eine Sicherheitsvorrichtung umfassend ein Substrat mit einem Array von Mikrolinsen auf einer Seite und einem entsprechenden Array von Mikrobildern auf der anderen Seite.

DE 10 2007 049 512 A1 betrifft einen Mehrschichtkörper mit einer transparenten ersten Schicht, in die eine Vielzahl von Mikrolinsen abgeformt ist, und mit einer unterhalb der ersten Schicht in einer festen Lage zur ersten Schicht angeordneten zweiten Schicht, die eine Vielzahl von mikroskopischen Strukturen aufweist.

DE 10 2006 005 000 A1 betrifft einen Mehrschichtkörper mit einer Mikrolinsen-Anordnung, der vorzugsweise als optisches Sicherheitselement verwendbar ist.

Der Erfindung liegt nun die Aufgabe zugrunde, einen verbesserten Mehrschichtkörper anzugeben, welcher einen optisch variablen Eindruck vermittelt.

Diese Aufgabe wird von einem Mehrschichtkörper nach Anspruch 1 gelöst. Durch eine derartige Anordnung ergeben sich beim Verkippen des Mehrschichtkörpers für den menschlichen Betrachter bei Betrachtung des Mehrschichtkörpers von der Vorderseite, d.h. von Seiten der von der zweiten Schicht abgewandten Seite der ersten Schicht, interessante insbesondere zweidimensionale oder dreidimensionale optisch variable Effekte mit oder ohne Tiefenwirkung.

Vorteilhafte Ausgestaltungen der Erfindung sind in den Unteransprüchen bezeichnet.

Gemäß einer bevorzugten Ausführungsform der Erfindung ist die jeweilige Rasterweite des Mikrolinsenrasters in einer ersten Raumrichtung um mindestens 50 %, insbesondere um mehr als 100 % größer als die jeweilige Abmessung der jeweiligen Mikrolinse in der ersten Raumrichtung. Unter Rasterweite des Mikrolinsenrasters wird hierbei der jeweilige durch die Beabstandung der Flächenschwerpunkte der Mikrolinsen bestimmte Mikrolinsenabstand der jeweiligen Mikrolinse von ihrer benachbarten Mikrolinse verstanden. So wird durch das Mikrolinsenraster ein Koordinatensystem mit einer ersten Koordinatenachse und einer hierauf vorzugsweise rechtwinkelig stehenden zweiten Koordinatenachse aufgespannt. In Richtung der ersten Koordinatenachse und/oder in Richtung der zweiten Koordinatenachse folgen nun die Mikrolinsen des Mikrolinsenrasters aufeinander, wobei die Flächenschwerpunkte der Mikrolinsen vorzugsweise auf einer Linie liegen, die parallel zu einer dieser Koordinatenachsen und vorzugsweise parallel zur ersten Raumrichtung orientiert ist. Die Abmessungen der jeweiligen Mikrolinse in der ersten Raumrichtung ist die Distanz zwischen den Fußpunkten der jeweiligen Mikrolinse, die sich durch den Schnitt einer in Richtung der ersten Raumrichtung orientierten und durch den Flächenschwerpunkt der jeweiligen Mikrolinse gehenden Geraden mit der äußeren Begrenzungslinie der jeweiligen Mikrolinse ergeben.

Es hat sich gezeigt, dass bei einer derartigen Vorgehensweise die für die Generierung des optischen variablen Effekts notwendige Schichtdicke des Mehrschichtkörpers deutlich reduziert werden kann. So beeinflusst die Brennweite der Mikrolinse einerseits die für die Abformung der Mikrolinsen notwendige Schichtdicke der ersten Schicht und auch die Beabstandung der zweiten Schicht von der von der zweiten Schicht abgewandten Oberfläche der ersten Schicht. Wird die Brennweite erhöht, so verringert sich zwar die für die Abformung notwendige Schichtdicke der ersten Schicht, die Distanz zwischen den Fußpunkten der Mikrolinsen und der zweiten Schicht, die vorzugsweise im Bereich der Brennweite der Mikrolinsen liegt, erhöht sich jedoch entsprechend. Durch die oben beschriebenen Maßnahmen wird zwar die Lichtstärke der ersten optisch variablen Information etwas reduziert, die Schichtdicke des Mehrschichtkörpers kann jedoch trotz der vorbeschriebenen Effekte deutlich reduziert werden.

Weiter hat es sich als vorteilhaft erwiesen, Mikrolinsen zu verwenden, deren maximale Strukturhöhe mindestens 35 %, insbesondere mindestens 50 % der Abmessung der jeweiligen Mikrolinse in der ersten Raumrichtung beträgt. Unter maximaler Strukturhöhe der jeweiligen Mikrolinse wird die maximale Erhebung der Mikrolinse über die durch die Fußpunkte der Mikrolinse aufgespannte Fußpunktebene der Mikrolinse verstanden.

Gemäß eines weiteren bevorzugten Ausführungsbeispiels der Erfindung wird die jeweilige Abmessung der Mikrobilder in der ersten Raumrichtung so gewählt, dass diese mehr als 50 %, insbesondere mehr als 100 % der Abmessung der jeweils benachbarten Mikrolinsen in der ersten Raumrichtung beträgt. Überraschenderweise hat sich gezeigt, dass bei einer derartigen Abmessung der Mikrobilder das optisch variable Erscheinungsbild weiter verbessert werden kann, insbesondere der Winkelbereich, unter dem beim Verkippen ein optisch variabler Effekt sichtbar wird, weiter verbessert werden kann.

Bevorzugt weisen die Mikrobildern eine kleinste Abmessung von weniger als 300$\mu$m, vorzugsweise von weniger als 100$\mu$m auf. Kleinste Abmessung bedeutet, dass mit dieser kleinsten Abmessung die gestauchte, geringste Ausdehnung der Mikrobilder gemeint ist, welche in der nicht gestauchten Ausdehnung erheblich größer sein können als die kleinste Abmessung. Unter kleinster Abmessung einer Zone, eines Bildes oder eines Mikrobildes wird somit die Abmessung ausgewählt aus Länge und Breite verstanden, welche die kleinere ist. Bei komplexeren Formgebungen wird zur Bestimmung der Breite und Länge ein entsprechendes virtuelles Rechteck bestimmt, das so gewählt ist, dass die komplexe Formgebung innerhalb des Rechtecks angeordnet ist und möglichst viele der Grenzlinien der komplexeren Formgebung mit den Kanten des Rechtecks berühren.

Gemäß eines weiteren bevorzugten Ausführungsbeispiels der Erfindung sind die Mikrobilder nicht auf einer planen Oberfläche, sondern auf einer gewölbten Oberfläche aufgebracht. Hierdurch wird der Vorteil erzielt, dass das jeweilige Mikrobild über einen recht großen Winkelbereich in etwa im Bereich der Fokuslänge der Mikrolinse angeordnet ist und sich somit das optische Erscheinungsbild des Mehrschichtkörpers verbessert, insbesondere die Kontrastschärfe bei größeren Kippwinkeln sich deutlich verbessert.

Die Wölbung ist hierbei in die oberhalb oder unterhalb der Mikrobildschicht angeordnete Schicht des Mehrschichtkörpers abgeformt. Aus Richtung des Mikrolinsenrasters betrachtet besitzt die Wölbung im zentralen Bereich des jeweiligen Mikrobildes ihren tiefsten Punkt. Die Wölbung erstreckt sich vorzugsweise über den gesamten Bereich des Mikrobildes. Es ist jedoch auch möglich, dass nicht das gesamte Mikrobild im Bereich der Wölbung angeordnet ist. Der tiefste Punkt der Wölbung besitzt zu diesem höchsten Punkt (Randbereich der Wölbung) eine Höhendifferenz, welche vorzugsweise im Bereich zwischen 5 bis 25 % der Breite des jeweiligen Mikrobildes liegt.

Vorzugsweise wird zur Herstellung der Wölbung im Bereich des jeweiligen Mikrobildes eine Oberflächenstruktur in eine oberhalb oder unterhalb der Mikrobildschicht angeordnete Schicht abgeformt, auf welche dann die Mikrobildschicht aufgebracht wird. Diese Oberflächenstruktur besitzt vorzugsweise eine der jeweiligen Mikrolinse ähnliche Formgebung, d.h. eine Formgebung, die ggf. gegenüber der Formgebung der jeweiligen Mikrolinse 21 an der von der Längs- und Querrichtung des Mehrschichtkörpers aufgespannten Ebene gespiegelt ist und in dieser Ebene um einen Verzerrungsfaktor f verzerrt ist. Eine Spiegelung an der Ebene ist insbesondere dann vorzusehen, wenn die Oberflächenstruktur in eine unterhalb der Mikrobildschicht angeordnete Schicht abgeformt ist, so dass die oben angeführte Bedingung erfüllt ist. Handelt es sich bei der Mikrolinse somit um eine sphärische Mikrolinse, so besitzt die Wölbung eine kugeloberflächenförmige Formgebung. Handelt es sich bei den Mikrolinsen um sphärische Zylinderlinsen, so besitzt die Wölbung die Formgebung einer Zylinderoberfläche. Der Verzerrungsfaktor f wird hierbei vorzugsweise so gewählt, dass die oben angegebenen Höhendifferenzen zwischen dem Rand und dem tiefsten Punkt der Wölbung in Bezug auf die Größe des Mikrobildes eingehalten werden.

Gemäß eines weiteren bevorzugten Ausführungsbeispiels der Erfindung weist der Mehrschichtkörper ein Trägersubstrat einer Schichtdicke von mehr als 6 $\mu$m, insbesondere mehr als 12 $\mu$m auf. Das Trägersubstrat ist nun in einem zweiten Bereich transparent ausgebildet oder weist in dem zweiten Bereich eine fensterförmige Durchbrechung auf, wobei der zweite Bereich den ersten Bereich vorzugsweise vollflächig überdeckt. Die erste Schicht wird nun auf der Vorderseite des Trägersubstrats angeordnet und die zweite Schicht auf der Rückseite des Trägersubstrats angeordnet. Durch diese Vorgehensweise werden mehrere Vorteile erzielt: So wird zum einen die Sicherheit des Sicherheitselements weiter dadurch erhöht, dass die erste Schicht und die zweite Schicht mittels zweier passergenau zueinander auszuführender Applikationsschritte auf ein gemeinsames Trägersubstrat appliziert werden müssen. Registerschwankungen der Applikationsprozesse, insbesondere bereits geringfügige Verdrehungen der durch die Applikationsprozesse auf die Vorder- und Rückseite des Trägersubstrats applizierten Elemente gegeneinander, werden durch die auftretenden Moiré-Effekte sofort sichtbar, so dass eine Nachahmung eines solchen Mehrschichtkörpers sowie die Entfernung der Folienelemente von einem Mehrschichtkörper und Applizieren auf einen weiteren Mehrschichtkörper durch einen Fälscher - insbesondere aufgrund der erzielbaren Registergenauigkeiten hierfür von ca. 0,5 mm - nur sehr schwer möglich und eine Fälschung unmittelbar erkennbar ist. Im weiteren kann hierdurch die Schichtdicke der auf dem Trägersubstrat aufzubringenden Schichten deutlich verringert werden, da das Trägersubstrat selbst als optische Distanzschicht zwischen der ersten und zweiten Schicht wirkt. Hierdurch wird die Haptik eines Wertdokuments, beispielsweise einer Banknote, durch die Implementierung der die erste optisch variable Information generierenden Schichten nur unwesentlich beeinflusst und auch die Beständigkeit des Wertdokuments gegenüber den bei Gebrauch auftretenden mechanischen Belastungen weiter verbessert. Vorzugsweise handelt es sich hierbei - wie bereits oben erwähnt - bei dem Mehrschichtkörper um ein Wertdokument und das Trägersubstrat stellt das Trägersubstrat des Wertdokuments dar, beispielsweise das Banknoten-Substrat. Das Trägersubstrat stellt so beispielsweise das aus Papier, Kunststoff, oder einer Abfolge, z.B. einem Laminat von Papier und Kunststoffschichten bestehende Trägersubstrat einer Banknote dar, welches vorzugsweise eine Schichtstärke von 30 bis 200 $\mu$m besitzt.

Vorzugsweise weist der Mehrschichtkörper im ersten Bereich hierbei eine dritte Schicht auf, die unterhalb der zweiten Schicht angeordnet ist und die bei Betrachtung des Mehrschichtkörpers von der Rückseite eine zweite optisch variable Information generiert, die für den menschlichen Betrachter nicht bei Betrachtung der Vorderseite des Mehrschichtkörpers sichtbar ist und sich von der ersten optisch variablen Information unterscheidet. Zwischen der zweiten und dritten Schicht ist hierbei vorzugsweise noch eine zumindest in Auflicht-Betrachtung für den menschlichten Betrachter opake Schicht angeordnet, welche eine sichere optische Trennung der ersten und zweiten optisch variablen Information ermöglicht. Durch diese Maßnahme wird die Sicherheit gegenüber Nachahmungen weiter verbessert und für den Betrachter leicht erkennbare, prägnante Sicherheitsmerkmale bereitgestellt.

Weitere Vorteile ergeben sich dadurch, dass in der ersten Schicht und/oder in der zweiten Schicht in einem an den ersten Bereich angrenzenden, den ersten Bereich vorzugsweise umschließenden Bereich, noch weitere vorzugsweise opak ausgeführte Sicherheitselemente ausgebildet sind, die in Durchlicht-Betrachtung zusammenwirken und beispielsweise in Durchlicht-Betrachtung sich zu einer weiteren optisch variablen Information ergänzen. Weiter ist es auch vorteilhaft, dass auf die Vorder- oder Rückseite des Trägersubstrats aufgebrachte Druckschichten ebenfalls solche Sicherheitselemente enthalten, die sich mit solchen in der ersten, zweiten oder dritten Schicht vorgesehenen Sicherheitselementen in Durchlicht-Betrachtung zu einer in Durchlicht-Betrachtung erkennbaren Information ergänzen. Hierdurch wird die Fälschungssicherheit weiter erhöht.

Gemäß eines weiteren bevorzugten Ausführungsbeispiels der Erfindung weist der Mehrschichtkörper eine transluzente Schicht auf, die zwischen der ersten Schicht und der zweiten Schicht angeordnet ist. Durch diese Maßnahme können weitere interessante optisch variable Effekte erzielt werden. So ist es hierdurch möglich, dass der erste optisch variable Effekt lediglich bei Durchlicht-Betrachtung als Wasserzeichen sichtbar ist. Im Auflicht ist der erste optisch variable Effekt jedoch nicht sichtbar. Bei dieser Ausführungsform werden die Mikrobilder vorzugsweise jeweils von ein oder mehreren Bildbereichen gebildet, die vor einem Hintergrundbereich angeordnet sind, wobei die ein oder mehreren Bildbereiche opak und der Hintergrundbereich transparent ausgebildet ist, oder umgekehrt. Die opaken Bildbereiche oder opaken Hintergrundbereiche können dabei beispielsweise aus opaken Lackschichten, opaken Metallschichten gebildet sein. Die opaken Bereiche und/oder die transparenten Bereiche können UV-aktive, IR-aktive Materialien oder magnetische Materialien beinhalten, die dann optische und/oder maschinenlesbare Zusatzfunktionen aufweisen können. Weiter weist bei dieser Ausführungsform der Mehrschichtkörper vorzugsweise ein Trägersubstrat auf, welches im ersten Bereich transparent ausgebildet ist oder im ersten Bereich eine fensterförmige Durchbrechung aufweist. Der Mehrschichtkörper besteht so vorzugsweise in den Hintergrundbereichen aus der transluzenten Schicht, aus mindestens einer opaken Schicht und optional aus ein oder mehreren transparenten Schichten und in den Bildbereichen aus der transluzenten Schicht und ein oder mehreren transparenten Schichten, oder umgekehrt.

Die transluzente Schicht weist vorzugsweise streuende Eigenschaften auf. Vorzugsweise weist die transluzente Schicht eine Transmissivität zwischen 1 % und 50 %, weiter bevorzugt zwischen 5 % und 30 % gemittelt über den für den menschlichen Betrachter sichtbaren Wellenlängenbereich auf. Weiter weist die transluzente Schicht bevorzugt folgende Volumenstreueigenschaften auf: Streuen eines Anteils zwischen 5 % und 50 % des eingestrahlten Lichts in Streuwinkeln > 5° im Mittel über den für den menschlichen Betrachter sichtbaren Wellenlängenbereich.

Gemäß eines weiteren bevorzugten Ausführungsbeispiels der Erfindung weist die zweite Schicht im ersten Bereich mindestens eine erste Zone auf, in der die Mikrobilder vorgesehen sind, und mindestens eine zweite Zone auf, in der optisch aktive Oberflächenstrukturen zur Generierung einer dritten optisch variablen Information vorgesehen sind, die sich von der ersten optisch variablen Information unterscheidet. Bei den optisch aktiven Oberflächenstrukturen handelt es sich hierbei vorzugsweise um diffraktive Oberflächenstrukturen, welche beispielsweise in den zweiten Zonen ein Hologramm oder ein Kinegram® (Kinegram® = optisch variabler Effekt mit Farbwechseleffekten und/oder Bildwechseleffekten bei sich änderndem Blickwinkel und/oder sich ändernden Beleuchtungsbedingungen) als dritte optisch variable Information generieren. Hierbei ist es möglich, dass die Mikrolinsen dann nur in den ersten Zonen, nicht jedoch in den zweiten Zonen, vorgesehen sind. Weiter ist auch möglich, dass die Mikrolinsen sowohl in den ersten als auch in den zweiten Zonen vorgesehen sind und somit das Mikrolinsenraster sowohl die ersten als auch die zweiten Zonen bedeckt. Besonders vorteilhaft ist hierbei dann, wenn die erste Schicht in der mindestens einen zweiten Zone mit einer Lackschicht versehen ist, insbesondere mit einer Lackschicht überdruckt ist, deren Brechungsindex sich von dem Brechungsindex der ersten Schicht um weniger als 0,3 unterscheidet. Durch diese zusätzliche Lackschicht wird die optische Wirkung der Mikrolinsen in der mindestens einen zweiten Zone ausgelöscht, so dass die Mikrolinsen das optische Erscheinungsbild der in der mindestens einen zweiten Zone angeordneten optisch aktiven Oberflächenstruktur nicht mehr beeinflussen können. Durch diese Vorgehensweise wird die Sicherheit des Mehrschichtkörpers gegenüber Fälschung und Nachahmung weiter verbessert. Fehler in der passergenauen Anordnung der ersten und zweiten Schicht zueinander führen unmittelbar zur Störung der ersten und dritten optisch variablen Information oder es wird ein Grenzbereich zwischen erster und dritter optisch variabler Information sichtbar, welcher deutliche, sofort für den menschlichen Betrachter erkennbare Störeffekte zeigt. Damit werden bereits geringste Registerabweichungen zwischen erster und zweiter Schicht für den menschlichen Betrachter erkennbar.

Vorzugsweise weist die mindestens eine zweite Zone eine kleinste Abmessung von mehr als 300 μm auf und ist musterförmig zur Generierung einer vierten Information ausgeformt. So ist die mindestens eine zweite Zone beispielsweise in Form eines Buchstabens, einer Ziffer, eines Symbols oder einer bildlichen Darstellung ausgeformt, welche die vierte Information repräsentiert.

Weiter ist es vorteilhaft, wenn der erste Bereich in eine Vielzahl von ersten und zweiten Zonen unterteilt ist und die ersten und zweiten Zonen gemäß eines regelmäßigen Rasters mit einer Rasterweite von weniger als 300 μm in zumindest einer Raumrichtung angeordnet sind. Hierdurch ist es möglich, die erste und dritte optisch variable Information für den menschlichen Betrachter in ein und demselben Oberflächenbereich des Mehrschichtkörpers sichtbar zu machen und damit deutlich erkennbare, abrupte Änderungen des optischen Erscheinungsbildes in diesem Bereich zu erzielen. Weiter wird bei einer derartigen Ausführung sowohl die erste als auch die dritte optisch variable Information bereits bei geringen Registerschwankungen sehr deutlich gestört, so dass bereits geringste Registerschwankungen unmittelbar auch dem ungeübten Betrachter erkennbar werden und damit eine Fälschung oder Nachahmung des Mehrschichtkörpers deutlich erschwert wird.

Gemäß einem bevorzugten Ausführungsbeispiel der Erfindung werden die Mikrobilder jeweils von ein oder mehreren Bildbereichen gebildet, die vor einem Hintergrundbereich angeordnet bzw. umgeben sind. Die Mikrobilder bestehen beispielsweise jeweils aus einem Motiv, beispielsweise in Form eines Buchstabens, einer Ziffer, eines Textes, eines Symbols oder eines Bildes, welches die ein oder mehreren Bildbereiche bildet und welches vor einem Hintergrundbereich sichtbar ist, d.h. durch den Kontrast gegen den Hintergrundbereich sichtbar ist. Das Motiv kann hierbei von einem an die Begrenzungslinie des Motivs angrenzenden Hintergrundbereich umgeben sein oder auch Teilmotive oder Ausnehmungen umfassen, die durch den Hintergrundbereich abgetrennt oder von diesem ausgefüllt sind. Hierbei ist es auch möglich, dass innerhalb des Bildbereichs die Farbe, die Reflexionseigenschaften und/oder die Absorptionseigenschaften der zweiten Schicht variiert sind.

Wie bereits oben erwähnt, ist es möglich, dass die ein oder mehreren Bildbereiche der Mikrobilder opak und der Hintergrundbereich oder die Hintergrundbereiche transparent sind, oder umgekehrt. Weiter ist es auch möglich, dass die ein oder mehreren Bildbereiche und der Hintergrundbereich unterschiedliche Transmissions- oder Reflexionseigenschaften besitzen. Vorteilhaft ist weiter, wenn die Bildbereiche und der Hintergrundbereich unterschiedliche Polarisationseigenschaften aufweisen, z.B. unterschiedliche Linearpolarisation oder unterschiedliche Zirkularpolarisation oder auch unterschiedliche elliptische Polarisationszustände.

Die zweite Schicht kann aus einer einzelnen Schicht oder aus mehreren Teilschichten bestehen, insbesondere eine metallische Schicht, eine eingefärbte Lackschicht und/oder eine Photoresistschicht aufweist, die in dem ersten Bereich in den Bildbereichen vorgesehen und in dem Hintergrundbereich nicht vorgesehen ist, oder umgekehrt. Die Photoresistschicht besteht hierbei vorzugsweise aus einem positiven oder negativen Photoresist, der weiter bevorzugt auch mit einem Farbstoff oder Pigment eingefärbt sein kann.

Weiter ist es vorteilhaft, wenn die Bildbereiche und/oder die Hintergrundbereiche mit einem optisch variablen Element belegt sind, insbesondere die Bildbereiche einerseits und die Hintergrundbereiche andererseits mit unterschiedlichen optisch variablen Elementen belegt sind. Die optisch variablen Elemente könnten beispielsweise von optisch aktiven Oberflächen-Reliefen, insbesondere von Beugungsstrukturen gebildet sein, beispielsweise Beugungsstrukturen wie Hologramme oder Kinegram®, anisotrope oder isotrope Mattstrukturen, Mottenaugenstrukturen, asymmetrische oder symmetrische Gitterstrukturen, Lineargitterstrukturen, Kreuzgitterstrukturen, Hexagonalgitterstrukturen, Beugungsstrukturen nullter Ordnung oder Kombinationen derartiger Beugungsstrukturen sein. Insbesondere kann es vorteilhaft sein, Beugungsstrukturen einzusetzen, die mit einer vorzugsweise metallischen Reflexionsschicht belegt sind und einen Großteil des einfallenden Lichtes absorbieren, insbesondere Lineargitterstrukturen, Kreuzgitterstrukturen, oder Hexagonalgitterstrukturen mit Gitterperioden im Bereich von 100 nm bis 500 nm, besonders bevorzugt im Bereich von 200 nm bis 400 nm und Strukturtiefen im Bereich von 50 nm bis 2000 nm, besonders bevorzugt im Bereich von 200 nm bis 1000 nm. Vorteilhaft ist es weiter, wenn die optisch variablen Elemente von Dünnfilmschichtelementen gebildet werden, welche eine optische Schichtdicke von $\lambda/2$ oder $\lambda/4$ aufweisen, für $\lambda$ im Wellenbereich des sichtbaren Lichts, und blickwinkelabhängige Farbverschiebungseffekte zeigen, oder von einer Flüssigkristallschicht gebildet wird, welche in unterschiedlichen Bereichen unterschiedliche Polarisationseigenschaften zeigt oder ebenfalls einen blickwinkelabhängigen Farbverschiebungseffekt zeigt. Vorteilhaft ist es weiter, wenn die optisch variablen Elemente UV-aktive, IR-aktive Materialen, insbesondere Pigmente oder Farbstoffe oder magnetische Materialien, insbesondere Partikel oder Plättchen aufweisen. Vorteilhafterweise weist die zweite Schicht so auch eine Replizierlackschicht mit einem in die Oberfläche der Replizierlackschicht abgeformten Oberflächen-Relief auf, wobei - wie oben erläutert - das in den Bildbereichen einerseits und in den Hintergrundbereichen andererseits abgeformte Oberflächen-Relief unterschiedlich ist.

Gemäß eines bevorzugten Ausführungsbeispiels der Erfindung ist das Mikrolinsenraster in einem 45°-Winkel zu der Längsachse des Mehrschichtkörpers verdreht angeordnet. Es hat sich gezeigt, dass sich hierdurch insbesondere bei Verwendung eines eindimensionalen Mikrolinsenrasters besonders interessante optische Effekte generieren lassen. Wird so beispielsweise ein eindimensionales Mikrolinsenraster verwendet, bei dem die - vorzugsweise parallel zueinander orientierten - Brennpunktlinien der Mikrolinsen in einem 45°-Winkel zur Längsachse des Mehrschichtkörpers angeordnet sind, so zeigt sich sowohl beim Verkippen des Mehrschichtkörpers um eine etwa horizontale Achse als auch um eine etwa vertikale Achse ein vorbestimmter Bewegungseffekt, der um jeden Winkel von 0 bis 360°, das heißt in jeder beliebigen Richtung verlaufen kann. Weiterhin kann auch eine Bewegung entlang einer nicht-linearen Bahn, beispielsweise entlang einer gebogenen Kurve erfolgen. Unter Längsachse des Mehrschichtkörpers wird hierbei die in Richtung der Länge des Mehrschichtkörpers orientierte Koordinatenachse verstanden.

Weiter ist es hier bevorzugt, dass der Mehrschichtkörper eine rechteckförmige, insbesondere streifen- oder bandförmige Formgebung besitzt.

Es ist hierbei möglich, dass der erste Bereich, in dem die Mikrolinsen vorgesehen sind, den gesamten Mehrschichtkörper bedeckt oder einen Bereich über die gesamte Länge des Mehrschichtkörpers bedeckt oder auch nur einen Teilbereich des Mehrschichtkörpers bedeckt. So ist es beispielsweise möglich, dass neben dem ersten Bereich noch weitere, von den Mikrolinsen nicht bedeckte Bereiche auf dem Mehrschichtkörper vorgesehen sind, in denen andere, vorzugsweise optisch variable Sicherheitselemente vorgesehen sind. Diese anderen, vorzugsweise optisch variablen Sicherheitselemente können jedoch auch ganz oder nur bereichsweise in dem ersten Bereich vorgesehen sein und dabei von den Mikrolinsen vollständig oder nur bereichsweise bedeckt sein. Trotz der Bedeckung mit den Mikrolinsen können andere Sicherheitselemente vorzugsweise optisch und/oder maschinenlesbar für Ihre Wirkung oder Funktionalität ausreichend wahrnehmbar und/oder auslesbar sein.

Gemäß eines bevorzugten Ausführungsbeispiels der Erfindung handelt es sich bei dem Mikrolinsenraster und/oder dem Mikrobildraster um ein zweidimensionales Mikrolinsenraster bzw. Mikrobildraster. Das Mikrolinsenraster bzw. Mikrobildraster spannt hierbei ein Koordinatensystem mit zwei vorzugsweise rechtwinkelig aufeinander stehenden Koordinatenachsen auf, wobei die Mikrolinsen bzw. Mikrobilder sowohl in eine erste Raumrichtung, insbesondere in Richtung der einen Koordinatenachse, und in eine zweite Raumrichtung, insbesondere in Richtung der anderen Koordinatenachse, mit einer jeweiligen Rasterweite zwischen 5 μm und 150 μm aufeinander abfolgen. Die Beabstandung benachbarter Mikrobilder bzw. Mikrolinsen wird hierbei vorzugsweise durch die Beabstandung der Flächenschwerpunkte der Mikrolinsen bzw. Mikrobilder bestimmt und entspricht vorzugsweise der jeweiligen Rasterweite.

Es ist weiter aber auch möglich, dass das Mikrolinsenraster und/oder das Mikrobildraster ein eindimensionales Mikrolinsenraster bzw. Mikrobildraster ist, bei dem zwei oder mehr Mikrolinsen bzw. Mikrobilder in einer Raumrichtung mit einer jeweiligen Rasterweite zwischen 5 μm und 300 μm aufeinander abfolgen.

Bei dem Mikrobildraster und/oder dem Mikrolinsenraster kann es sich hierbei um ein regelmäßiges Raster mit konstanten Rasterweiten handeln, aber auch um ein unregelmäßiges Raster mit variierenden Rasterweiten handeln. Weiter ist es auch möglich, dass die durch das Mikrolinsenraster und/oder das Mikrobildraster aufgespannten Koordinatensysteme geometrisch transformiert sind und somit die Koordinatenachsen nicht die Form einer Geraden besitzen, sondern beispielsweise schlangenlinienförmig oder kreisförmig ausgebildet sind.

Vorzugsweise unterscheiden sich die Rasterweiten des Mikrobildrasters und des Mikrolinsenrasters für jeweils benachbarte Mikrobilder und Mikrolinsen um weniger als 10 % voneinander, insbesondere zwischen 0,5 und 5 % voneinander. Bei einer derartigen Ausgestaltung wird bei Verwendung von identischen Mikrobildern ein Moiré-Vergrößerungseffekt bewirkt, d.h. die bei einem bestimmten Betrachtungswinkel sichtbare erste optisch variable Information entspricht einer vergrößerten Darstellung der (identischen) Mikrobilder. Aber auch bei der Verwendung unterschiedlicher Mikrobilder, welche zur Generierung komplexerer Bewegungs- und Transformationseffekte beim Verkippen des Mehrschichtkörpers führt, hat sich diese Maßnahme als vorteilhaft erwiesen.

Weiter hat sich bewährt, dass das Mikrobildraster und das Mikrolinsenraster gegeneinander zwischen 0,05° und 5° verdreht angeordnet sind, d.h. die Achsen der einander zugeordneten Koordinatenachsen des von dem Mikrobildraster und dem Mikrolinsenraster aufgespannten Koordinatensystems einen solchen Winkel einschließen.

Gemäß eines bevorzugten Ausführungsbeispiels der Erfindung sind in dem ersten Bereich die Rasterweite des Mikrolinsenrasters, die Rasterweite des Mikrobildrasters und/oder die Verdrehung des Mikrobildrasters und des Mikrolinsenrasters gegeneinander kontinuierlich gemäß einer Parametervariationsfunktion zumindest in eine Raumrichtung variiert. Hierdurch lassen sich beim Verkippen die bereits oben erwähnten Vergrößerungs-, Verkleinerungs- und Transformations-Effekte erzielen.

Weiter ist es vorteilhaft, wenn das Mikrobildraster in dem ersten Bereich zumindest zwei Mikrobilder aufweist, die sich voneinander unterscheiden. Besonders vorteilhaft ist hierbei, wenn sich in dem ersten Bereich die Form und/oder die Farbe der Mikrobilder kontinuierlich gemäß einer Transformations-Funktion ändert und so beim Verkippen des Mehrschichtkörpers beispielsweise Bewegungs-Effekte kombiniert mit Vergrößerungs-, Verkleinerungs- und Transformations-Effekten bewirkt werden.

Gemäß einer weiteren bevorzugten Ausführungsform sind in einem ersten Teilbereich des ersten Bereichs die Rasterweite des Mikrolinsenrasters, die Rasterweite des Mikrobildrasters und/oder die Verdrehung des Mikrolinsenrasters gegen das Mikrobildraster so gewählt, dass sich diese Parameter gegenüber den entsprechenden Parametern in einem zweiten Teilbereich des ersten Bereichs unterscheiden. Hierdurch wird bewirkt, dass sich das optisch variable Erscheinungsbild in dem ersten und dem zweiten Teilbereich voneinander unterscheidet und so die Fälschungssicherheit weiter verbessert wird.

Im Folgenden wird die Erfindung anhand von mehreren Ausführungsbeispielen unter Zuhilfenahme der beiliegenden Zeichnungen beispielhaft erläutert.

Fig. 1a    zeigt eine schematische Schnittdarstellung eines Mehrschichtkörpers.

Fig. 1b    zeigt eine schematische Draufsicht auf einen Mehrschichtkörper.

Fig. 1c    zeigt eine schematische Draufsicht auf einen Mehrschichtkörper.

Fig. 1d    zeigt eine Darstellung zur Verdeutlichung des Funktionsprinzips des Mehrschichtkörpers nach Fig. 1c

Fig. 1e    zeigt eine schematische Draufsicht auf einen Mehrschichtkörper.

Fig. 1f    zeigt eine schematische Schnittdarstellung eines Ausschnitts eines Mehrschichtkörpers.

Fig. 2    zeigt eine schematische Schnittdarstellung des Mehrschichtkörpers.

Fig. 3    zeigt eine schematische Schnittdarstellung eines Mehrschichtkörpers.

Fig. 4    zeigt eine schematische Schnittdarstellung eines Mehrschichtkörpers.

Fig. 5    zeigt eine schematische Schnittdarstellung eines Mehrschichtkörpers.

Fig. 6    zeigt eine schematische Schnittdarstellung eines Mehrschichtkörpers.

Fig. 7    zeigt eine schematische Schnittdarstellung eines Mehrschichtkörpers.

Fig. 8    zeigt eine schematische Schnittdarstellung eines Mehrschichtkörpers.

Fig. 9    zeigt eine schematische Draufsicht auf einen Mehrschichtkörper.

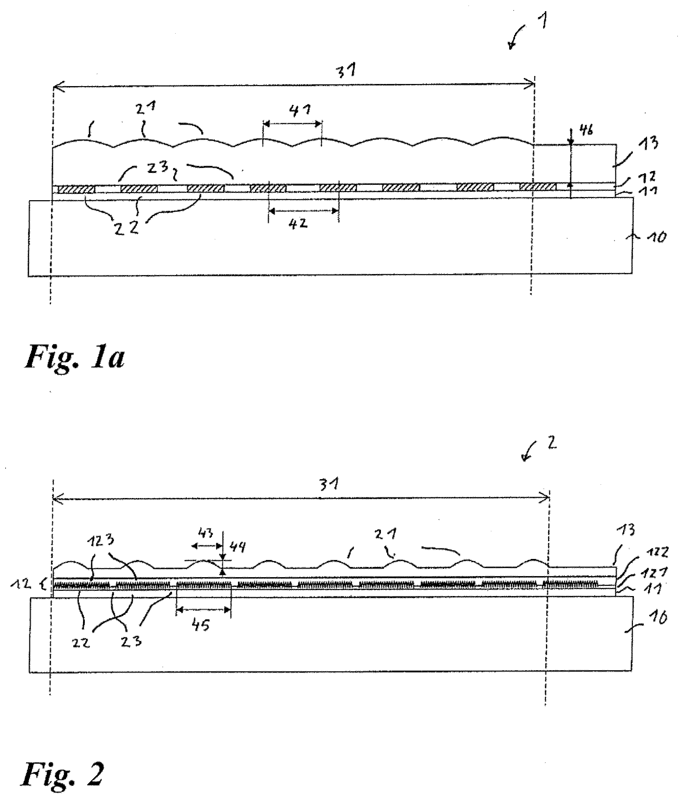

Fig. 1a zeigt einen Mehrschichtkörper 1 mit einem Trägersubstrat 10 und einem auf dem Trägersubstrat applizierten Folienelement umfassend eine Kleberschicht 11, eine Dekorschicht 12 und eine transparente Schicht 13.

Bei dem Trägersubstrat 10 handelt es sich vorzugsweise um ein Papiersubstrat einer Schichtdicke zwischen 10 $\mu$m und 200 $\mu$m. Falls es sich bei dem Mehrschichtkörper 1 um eine Verpackung handelt, kann es sich bei dem Trägersubstrat auch um ein (dickes) Karton- oder Kunststoffsubstrat handeln. Es ist jedoch auch möglich, dass es sich bei dem Trägersubstrat 10 um ein Substrat umfassend eine oder mehrere Schichten handelt. Das Trägersubstrat 10 bildet vorzugsweise das Trägersubstrat eines Wertdokuments, vorzugsweise einer Banknote, und ist somit beispielsweise optional auch noch mit ein oder mehreren Schichten auf der Vorder- und/oder auf der Rückseite bedruckt.

Das die Schichten 11, 12 und 13 umfassende Folienelement ist in Form eines Patches oder eines Streifens auf das Trägersubstrat 10 appliziert. Bei diesem Folienelement handelt es sich so beispielsweise um einen Sicherheitsfaden oder Sicherheitsstreifen, insbesondere um einen Fenstersicherheitsfaden oder Fenstersicherheitsstreifen. Es ist jedoch auch möglich, dass das Folienelement vollflächig den gesamten Bereich des Trägersubstrats 10 überdeckt. Das die Schichten 11, 12 und 13 umfassende Folienelement wird vorzugsweise als Übertragungslage einer Transferfolie, insbesondere einer Heißprägefolie, auf das Substrat 10 appliziert. Es ist jedoch auch möglich, dass das Folienelement als Laminierfolie oder als Sicherheitsfaden ausgebildet ist und als solche auf das Trägersubstrat 10 appliziert oder in das Trägersubstrat 10 eingebracht wird.

Bei der Schicht 11 handelt es sich um eine Kleberschicht einer Schichtdicke zwischen 0,5 und 10 $\mu$m, vorzugsweise zwischen 1 und 5 $\mu$m.

Bei der Dekorschicht 12 handelt es sich um eine Schicht, welche eine Vielzahl von Mikrobildern 22 aufweist, die gemäß einem Mikrobildraster angeordnet sind. Die Dekorschicht 12 besteht so beispielsweise aus einer strukturierten, partiell vorgesehenen Metallschicht, insbesondere einer Metallschicht einer Schichtdicke von 10 nm bis 5000 nm, die bereichsweise musterförmig zur Ausbildung der Mikrobilder 22 ausgeformt ist. Die Mikrobilder 22 zeigen hierbei jeweils ein Motiv, welches durch den Kontrast zwischen einem oder mehreren Bildbereichen und einem oder mehreren Hintergrundbereichen 23 gebildet ist, die ein unterschiedliches optisches Erscheinungsbild zeigen. So ist bei der Ausgestaltung der Dekorschicht 12, wie vorstehend erläutert, als partielle Metallschicht beispielsweise das Metall der Metallschicht in den Bildbereichen vorgesehen und in den Hintergrundbereichen 23 nicht vorgesehen, so dass sich die Mikrobilder 22 durch den Kontrast zwischen Bildbereichen und Hintergrundbereichen 23 zeigen. Sind die Hintergrundbereiche transparent oder transluzent ausgebildet, beispielsweise durch einen transparenten oder transluzenten Lack, ist durch die Hintergrundbereiche 23 hindurch die Kleberschicht 11 sichtbar, die dadurch als kontrastierende Hintergrundebene zu den Bildbereichen dient. Dabei hat es sich als vorteilhaft erwiesen, die Kleberschicht 11 mit farbigen Pigmenten und/oder Farbstoffen einzufärben, um damit auch die Hintergrundbereiche 23 farbig gestalten zu können. Damit sind stark kontrastierende Motive aus beispielsweise metallischen Bildbereichen und farbigen Hintergrundbereichen erzielbar. Ebenso ist es möglich, die Kleberschicht 11 alternativ oder zusätzlich mit UV-aktiven oder IR-aktiven Pigmenten und/oder Farbstoffen einzufärben, um je nach Beleuchtungsbedingung die Kontrastwirkung zwischen Bildbereichen und Hintergrundbereichen 23 variieren zu können.

Weiter ist es auch möglich, dass die Mikrobilder 22 nicht nur von der Dekorschicht 12, sondern von einer direkt auf dem Trägersubstrat 10 aufgedruckten Dekorschicht und/oder durch die Überlagerung der Dekorschicht 12 mit einer solchen direkt auf das Trägersubstrat 10 aufgebrachten Schicht gebildet werden. So ist es beispielsweise möglich, Merkmale aufzudrucken, welche eine geringe Phasenvariation in Bezug auf das Raster des Mikrolinsenrasters besitzen. Weiter kann beispielsweise ein Offset-Druck ein Raster von Hintergrundfarben und Bildfarben besitzen, welches eine Frequenzspreizung aufweist, wohingegen das Linsenraster eine konstante Frequenz besitzt.

Es kann anstelle eines Offsetdrucks hier auch ein anderes Druckverfahren, beispielsweise ein Tiefdruckverfahren, ein Siebdruckverfahren, ein Tampon-Druckverfahren, ein Intaglio-Druckverfahren oder auch ein Tintenstrahldruckverfahren verwendet werden.

Weiter ist es auch möglich, dass die Schicht 12 von einer eingefärbten Lackschicht oder einer eingefärbten Photoresistschicht gebildet wird oder aus mehreren (gefärbten) Lackschichten, Photolackschichten und/oder Metallschichten besteht, welche ein unterschiedliches optisches Erscheinungsbild der Dekorschicht 12 in den Bildbereichen und Hintergrundbereichen bewirken und damit die Mikrobilder 22 in der Dekorschicht 12 ausbilden. Weiter ist es auch möglich, dass die Dekorschicht eine Replizierlackschicht aufweist, in welcher ein optisch aktives Oberflächen-Relief abgeformt ist. Der optische Kontrast zwischen Bildbereichen und Hintergrundbereichen kann hierbei dadurch bewirkt werden, dass die Oberflächen-Reliefs entweder in den Bildbereichen oder in den Hintergrundbereichen abgeformt sind oder in den Bildbereichen und in den Hintergrundbereichen unterschiedliche Oberflächen-Reliefe in die Replizierlackschicht abgeformt sind. Die Replizierlackschichten und insbesondere die Oberflächen der Replizierlackschichten, in die das jeweilige Oberflächen-Relief abgeformt ist, sind mit einer reflexionserhöhenden Schicht versehen, beispielsweise einer HRI-Schicht oder einer metallischen Schicht, vorzugsweise aus Aluminium, Silber, Kupfer, Gold, Chrom oder einer Legierung mit solchen Metallen . In diesem Fall weist die Dekorschicht 12 somit eine Replizierlackschicht mit abgeformtem Oberflächen-Relief und eine Reflexionsschicht auf, welche vorzugsweise unterhalb der Replizierlackschicht angeordnet ist. Als optisch aktives Oberflächen-Relief wird hierbei vorzugsweise eine diffraktive Reliefstruktur mit einer Spatialfrequenz von mehr als 300 Linien/mm, vorzugsweise von 500 bis 4500 Linien/mm verwendet. Bei der diffraktiven Reliefstruktur handelt es sich vorzugsweise um ein computergeneriertes Beugungsgitter, beispielsweise einem Dot-Matrix oder e-beam Hologramm, wobei sich dieses Beugungsgitter in den Bildbereichen und Hintergrundbereichen beispielsweise im Azimutwinkel, in der Spatialfrequenz, in der Profilform oder in der Relieftiefe unterscheidet. Weiter ist es auch möglich, dass als Oberflächen-Relief eine anisotrope oder isotrope Mattstruktur, Mottenaugenstrukturen, asymmetrische oder symmetrische Gitterstrukturen, Lineargitterstrukturen, Kreuzgitterstrukturen, Hexagonalgitterstrukturen, Beugungsstrukturen nullter Ordnung oder Kombinationen derartiger Beugungsstrukturen verwendet wird.

Weiter ist es auch möglich, dass die Dekorschicht 11 zusätzlich oder anstelle der vorgenannten Schicht ein Dünnfilmschichtsystem zur Erzeugung von blickwinkelabhängigen Farbverschiebungseffekten, Flüssigkristallschicht oder eine Schicht umfassend optisch aktive Pigmente umfasst, beispielsweise UV-Pigmente, Flüssigkristall-Pigmente oder Interferenzschicht-Pigmente. Auch diese Schicht ist vorzugsweise so strukturiert, dass sie entweder in den Hintergrundbereichen oder in den Bildbereichen vorgesehen ist und damit einen Kontrast zwischen Bildbereichen und Hintergrundbereichen bewirkt. Weiter ist es auch möglich, dass die Mikrobilder einen Farbverlauf oder unterschiedliche Helligkeitswerte im Bereich eines Bildbereiches aufweisen und die entsprechenden Schichten der Dekorschicht entsprechend gestaltet sind, um diesen Helligkeits- oder Farbverlauf entsprechend zu realisieren.

Die Mikrobilder 22 sind - wie bereits oben erwähnt - gemäß einem ein- oder zweidimensionalen Mikrobildraster angeordnet, wobei die Rasterweite des Mikrobildraster, d.h. die jeweilige Beabstandung benachbarter Mikrobilder 22, konstant sein kann oder auch variieren kann. In Fig. 1a ist beispielhaft eine Rasterweite 42 des Mikrobildrasters eingezeichnet, welche durch den Mikrobildabstand der in Fig. 1a gezeigten benachbarten Mikrobilder 22, d.h. der Beabstandung von deren Flächenschwerpunkten zueinander, bestimmt wird.

Die Schicht 13 besteht aus einem für den menschlichen Betrachter transparenten Material und weist vorzugsweise eine Schichtdicke zwischen 5 und 150 μm auf. In die von der Schicht 12 abgekehrte Oberfläche der Schicht 13 sind Mikrolinsen 21 abgeformt, wie dies in Fig. 1a angedeutet ist. Bei den Mikrolinsen kann es sich um sphärische Mikrolinsen, aber auch um beliebige andere Linsenformen, insbesondere auch um Zylinderlinsen, handeln. Die Zylinderlinsen können hierbei sphärisch, asphärisch oder als diffraktive Linsen mit beliebigen Phasenfunktionen ausgebildet sein. Im einfachsten Fall wird hierbei die Brennweite der Linsen durch deren Wölbungsradius bestimmt. Die Brennweite der Mikrolinsen wird hierbei bevorzugt so gewählt, dass die Beabstandung 46 der Mikrobilder 22 von den Mikrolinsen 21 in etwa im Bereich der Brennweite der Mikrolinsen 21 liegt.

Die Relieftiefe, d.h. die Distanz zwischen dem höchsten und dem tiefsten Punkt der Mikrolinsen, beträgt hierbei vorzugsweise zwischen 2 und 50 μm. Die Mikrolinsen 21 können beispielsweise mittels eines Prägewerkzeugs, beispielsweise mittels einer mechanisch wirkenden Prägewalze oder eines Prägestempels oder mittels Laserablation in die Oberfläche der Schicht 13 eingebracht sein. In diesem Fall besteht die transparente Schicht 13 beispielsweise aus einer Lackschicht, aus einer Kunststofffolie, beispielsweise einer Folie aus PET (Polyethylenterephthalat), PEN (Polyethylennaphthalat) oder BOPP (biaxially oriented polypropylene = biaxial gerecktes Polypropylen), oder aus mehreren Schichtlagen, beispielsweise einer Replizierlackschicht und einer unter dieser angeordneten transparenten Trägerfolie, beispielsweise einer PET-Folie. Die Abformung der Mikrolinsen in die transparente Schicht 13 erfolgt hierbei vorzugsweise mittels UV-Replikation, das heiß durch das Abformen der Mikrolinsenstruktur in eine weiche, noch nicht oder nur gering ausgehärtete Replizierlackschicht und anschließendes Aushärten der Replizierlackschicht mit energiereicher Strahlung, vorzugsweise UV-Strahlung. Es ist jedoch auch möglich, dass zur Herstellung der Mikrolinsen 21 auf eine transparente Schicht ein Lack aufgebracht und entsprechend beispielsweise durch ein formgebendes Werkzeug oder einen physikalischen Prozess mit einer dem Mikrolinsenraster entsprechenden Oberfläche versehen wird. Weiter ist es auch möglich, dass es sich bei den Mikrolinsen 21 um diffraktive Linsen handelt.

Weiter ist es auch möglich, dass zwischen den Schichten 12 und 13 noch weitere transparente Schichten in dem Mehrschichtkörper 1 vorgesehen sind oder auch, dass noch weitere Schichten zwischen der Schicht 11 und der Schicht 12 oder oberhalb der Schicht 13 in dem Mehrschichtkörper 1 vorgesehen sind.

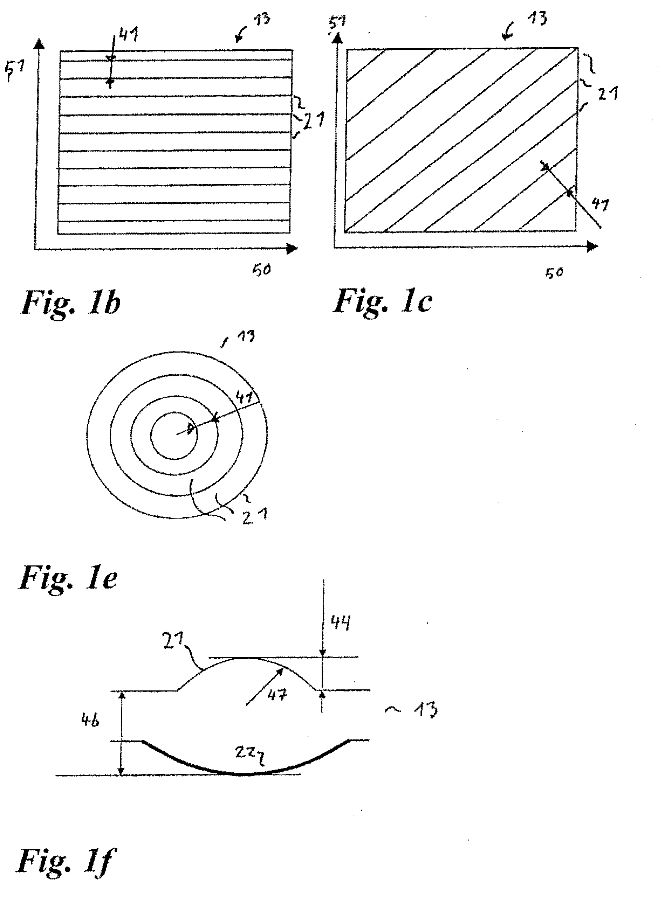

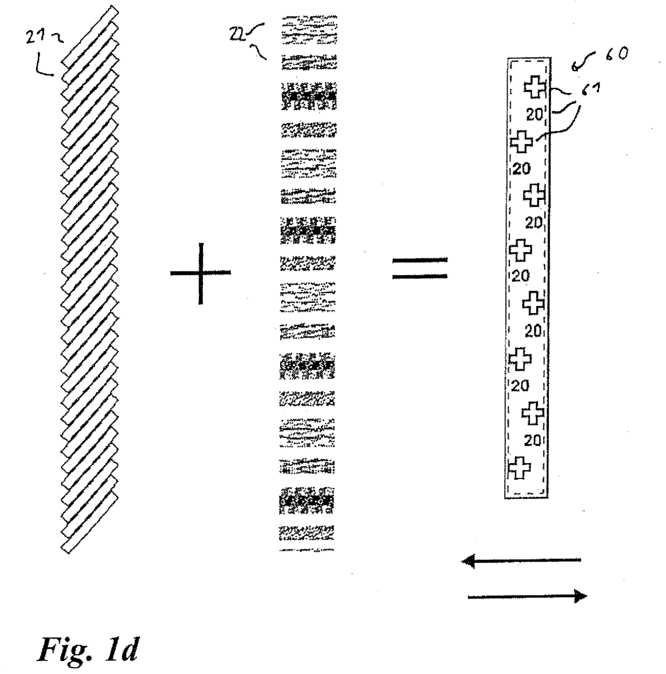

Die Mikrolinsen 21 sind - wie bereits oben ausgeführt - gemäß einem ein- oder zweidimensionalen Linsenraster angeordnet, wobei die Rasterweite des Linsenrasters konstant sein kann oder auch lokal variieren kann. So zeigt Fig. 1 beispielhaft eine Rasterweite 41, welche dem Mikrolinsenabstand der in Fig. 1 gezeigten benachbarten Mikrolinsen, d.h. der Beabstandung von deren Flächenschwerpunkt, entspricht.

Die Beabstandung 46 der Mikrolinsen 21 von den Mikrobildern 22 liegt bevorzugt in etwa im Bereich der Brennweite der Mikrolinsen 21 und weicht bevorzugt um nicht mehr als 10 % von der Brennweite der Mikrolinsen 21 ab.

Die Rasterweite des Mikrolinsenrasters entlang der Schnittlinie des in Fig. 1 gezeigten Schnittes beträgt hierbei vorzugsweise zwischen 5 und 300 μm und die Rasterweite des Mikrobildrasters in Richtung der Schnittlinie beträgt vorzugsweise zwischen 5 und 300 μm. Bezüglich der Ausformung der Mikrobilder 22, der Ausgestaltung der Rasterweite des Mikrobildrasters und Mikrolinsenrasters sowie der gegenseitigen Ausrichtung des Mikrolinsenrasters und Mikrobildrasters wird auf die vorgehenden Ausführungen verwiesen.

Bevorzugt sind die Mikrolinsen 21 gemäß einem eindimensionalen Linsenraster angeordnet, wie dies im Folgenden beispielhaft anhand der Figuren Fig. 1b bis Fig. 1e erläutert wird.

So zeigt Fig. 1b eine Draufsicht auf einen Ausschnitt der Schicht 13, wobei in Fig. 1b die Brennpunktlinien der in Form von Zylinderlinsen ausgeformten Mikrolinsen 21 durch Linien angedeutet ist. Die Mikrolinsen 21 sind gemäß einem eindimensionalen Mikrolinsenraster angeordnet, welches ein Koordinatensystem mit den Achsen 50 und 51 aufspannt. Die Achse 50 des Koordinatensystems ist parallel zur Querachse des Mehrschichtkörpers 1 und parallel zu den Brennpunktlinien der Mikrolinsen 21 orientiert und die Koordinatenachse 51 ist senkrecht zu der Koordinatenachse 50 orientiert. Die Mikrolinsen 21 besitzen hierbei bevorzugt eine Länge von mehr als 1 mm und der Abstand zwischen benachbarten Mikrolinsen 21, die Rasterweite 41, beträgt weniger als 300 μm, bevorzugt zwischen 10 und 200 μm. In der Ausführungsform gemäß Fig. 1b sind die Flächenschwerpunktlinien der Mikrobilder 22 bevorzugt im Wesentlichen parallel oder parallel zu der Koordinatenachse 50 orientiert und die Rasterweiten des Mikrobildrasters und des Mikrolinsenrasters unterschieden sich voneinander, insbesondere zwischen 0,5 und 5 %.

Ein weiteres bevorzugtes Ausführungsbeispiel wird nun anhand der Figuren Fig. 1c und Fig. 1d erläutert.

Fig. 1c zeigt eine Draufsicht auf die Schicht 3, wobei - wie in Fig. 1b - die Brennpunktlinien der Mikrolinsen 21 durch entsprechende Linien gekennzeichnet sind. Auch hier werden die Mikrolinsen 21 von Zylinderlinsen gebildet, die gemäß eines eindimensionalen Mikrolinsenrasters mit einer Rasterweite 41 zwischen 10 μm und 300 μm, hier 35 μm angeordnet sind. Die Brennweite bzw. die Fokuslänge der Mikrolinsen beträgt zwischen 10 μm und 500 μm. Wie in Fig. 1d gezeigt, sind die Brennpunktlinien der Mikrolinsen 21 hierbei in einem Winkel von 45° gegenüber der Längsachse des Mehrschichtkörpers 1 verdreht und im Wesentlichen parallel zueinander angeordnet. In diesem Fall verdeutlicht die Koordinatenachse 51 die Längsrichtung des Mehrschichtkörpers 1 und die Koordinatenachse 50 die Querrichtung des Mehrschichtkörpers 1, bei dem es sich bevorzugt um ein streifenförmiges oder fadenförmiges Sicherheitselement handelt. Wie in Fig. 1b erläutert, sind die Mikrobilder 22 gemäß eines Mikrobildrasters angeordnet, welches - wie oben beschrieben - gegenüber dem Mikrolinsenraster verdreht angeordnet ist (insbesondere um 45° verdreht ist) oder wie oben beschreiben sich von diesem in der Rasterweite unterscheidet. Hierdurch ergibt sich das in Fig. 1d verdeutlichte optische Erscheinungsbild 60, bei dem Vordergrundelemente 61 eine links-rechts-Bewegung bei Kippen des Mehrschichtkörpers 1 in die horizontale Achse und eine links-rechts-Bewegung bei Kippen des Mehrschichtkörpers 1 um die vertikale Achse beschreiben.

Der Mehrschichtkörper 1 besitzt in dem Ausführungsbeispiel nach Fig. 1d beispielhaft eine Länge von 100 mm und eine Breite von 10 mm, d.h. eine Längsabmessung von 100 mm und eine Querabmessung von 10 mm.

Eine weitere Ausführungsform wird durch Fig. 1e verdeutlicht. Fig. 1e zeigt ebenfalls eine Draufsicht auf die Schicht 13, wobei hier ebenfalls die Brennpunktlinien der Mikrolinsen 21 durch Linien angedeutet sind. In diesem Fall werden die Mikrolinsen 21 von konzentrisch zueinander angeordneten Zylinderlinsen gebildet, die jeweils eine kreisförmige Formgebung besitzen und in einer Rasterweite 41 voneinander beabstandet - wie in Fig. 1d angedeutet - angeordnet sind. Im Weiteren ist es auch möglich, dass die Mikrolinsen 21 gemäß einem geometrisch transformierten eindimensionalen Mikrolinsenraster angeordnet sind und somit beispielsweise die Brennpunktlinien der Mikrolinsen in der von den Koordinatenachsen 50 und 51 aufgespannten Ebene jeweils eine schlangenlinienförmige Formgebung besitzen.

Ein weiteres Ausführungsbeispiel wird anhand von Fig. 1f verdeutlicht. Fig. 1f zeigt einen Ausschnitt des Mehrschichtkörpers 1 mit einer Mikrolinse 21 und einem zugeordneten Mikrobild 22. Bei der Mikrolinse 21 handelt es sich um eine Zylinderlinse mit einem Radius 47 und einer maximalen Strukturhöhe 44. Bei dem Ausführungsbeispiel nach Fig. 1f sind die Mikrobilder 22 nicht - wie in Fig. 1a gezeigt - in einer planen Ebene angeordnet, sondern auf einer im Bereich des jeweiligen Mikrobildes 22 gewölbten Oberfläche der Schicht 13 angeordnet. Hierzu wird in die Schicht 13 sowohl in die Oberseite als auch in die Unterseite eine Oberflächenstruktur repliziert, wobei die im Bereich der Mikrobilder 22 vorgesehenen Oberflächenstrukturen vorzugsweise eine linsenförmige Formgebung besitzt - wie dies in Figur 1f verdeutlicht worden ist. Wie bereits oben ausgeführt, weist die im Bereich der Mikrobilder 22 in die Schicht 13 abgeformte Mikrostruktur eine ähnliche Formgebung wie die Mikrolinse 21 auf und bildet so eine Wölbung in Form eines Ausschnitts einer Zylinderoberfläche aus, wie dies in Fig. 1f dargestellt ist.

Bei dem hier vorliegenden Fall, bei dem die Mikrolinse 21 als sphärische Zylinderlinse mit einem Radius 47 ausgebildet ist, gilt näherungsweise:

$$\frac{1}{x_i} = \frac{1}{3r} + \frac{0{,}074}{r}$$

Dabei ist r der Radius der Mikrolinse 21 und $x_i$ ist die Position des Bildes bezüglich der Flächennormal der Schicht 13, also der Abmessung 46 entspricht. Für einen Radius r = 50 $\mu$m ergibt sich so ein Parallaxen-Fokus von 150 $\mu$m und ein Wert von 122,75 $\mu$m für den äußersten Bildrand, d.h. eine Abweichung von 18 %. Die Wölbung für das Mikrobild 22 ist demnach so zu wählen, dass die tiefste Stelle des Mikrobilds 22 150 $\mu$m von der dem Mikrobild abgewandten Oberseite entfernt ist, d.h. die Abmessung 46 150 $\mu$m beträgt, und dass in dem Randbereich des Bildes das Mikrobild 122,75 $\mu$m von der Oberseitenschicht 13 entfernt angeordnet ist.

Fig. 2 zeigt einen Mehrschichtkörper 2, welcher wie im Folgenden beschrieben gegenüber dem Mehrschichtkörper 1 verbessert und abgeändert ist: Der Mehrschichtkörper 2 weist das Trägersubstrat 10 und das Folienelement mit den Schichten 11, 12 und 13 auf. Die Schicht 13 ist wie die Schicht 13 nach Fig. 1a bis Fig. 1f ausgebildet mit dem Unterschied, dass die Mikrolinsen 21 in dem Bereich 31 nicht, wie bei der Ausführungsform nach Fig. 1, unmittelbar aufeinander folgen, sondern, dass zwischen den Mikrolinsen 21 "flache" Bereiche vorgesehen sind, die nicht Teil einer Mikrolinse sind und nichts zu der Ablenkungsfunktion der Mikrolinsen 21 beitragen. Wie in Fig. 2 dargestellt, weisen die Linsen in Richtung der Schnittlinie des in Fig. 2 verdeutlichten Schnittes eine Abmessung 43 auf, welche um mindestens 30 %, insbesondere um mehr als 50 %, kleiner als die jeweilige Rasterweite des Mikrolinsenrasters entlang der Schnittlinie ist, d.h. die Abmessung 43 ist ≤ 0,5 Rasterweite 41. Im Weiteren weisen die Mikrolinsen 21 eine maximale Strukturhöhe, d.h. Abmessung 44, auf, die mindestens 25 %, insbesondere mindestens 50 % der Abmessung 43 der der Mikrolinsen ist. Durch diese Ausgestaltung der Mikrolinsen ist es möglich, die Schichtdicke der Schicht 13 entsprechend zu reduzieren und - wie in Fig. 2 dargestellt - die Schichtdicke des Mehrschichtkörpers 2 deutlich geringer als die Schichtdicke des Mehrschichtkörpers 1 auszubilden. Wie bereits oben in Bezug auf Fig. 1a erwähnt, ist die Distanz zwischen der Fußpunktebene der Mikrolinsen 21 und der Dekorschicht 12 hierbei in etwa (Abweichung ± 10 %) so gewählt, dass sie der Brennweite der Mikrolinsen 21 entspricht. Da die Mikrolinsen 21 andererseits einen deutlich geringeren Anteil der Fläche des Bereichs 31 bedecken, verringert sich die maximale Strukturhöhe der Mikrolinsen 21 auch bei Verringerung der Brennweite der Mikrolinsen 21 entsprechend, so dass durch diese beiden Effekte eine besonders dünne Ausgestaltung des Mehrschichtkörpers 2 erzielt werden kann.

Die Dekorschicht 12 ist wie die Dekorschicht 12 nach Fig. 1a bis Fig. 1f ausgebildet, wobei in Fig. 2 eine Ausführungsform der Dekorschicht 12 gezeigt ist, bei der die Dekorschicht aus einer transparenten Replizierlackschicht 122 und einer vollflächigen Metallschicht 121 besteht, wobei in den die Bildbereiche der Mikrobilder 22 bildenden Bereichen eine diffraktive Reliefstruktur 123 in die Oberfläche der Replizierlackschicht 122 abgeformt ist und in die Hintergrundbereiche 23 eine solche Reliefstruktur nicht abgeformt ist, d.h. diese Bereiche als Spiegelbereiche ausgebildet sind. Erwähnenswert ist hier noch weiter, dass bei der Ausführungsform nach Fig. 2 die Abmessung 45 der Mikrobilder 21 in einer ersten Raumrichtung, hier in Richtung der Schnittlinie des in Fig. 2 gezeigten Schnittes, mehr als 50 %, insbesondere mehr als 100 %, der Abmessung 43 jeweils benachbarter Mikrolinsen 21 in der ersten Raumrichtung beträgt. Hierdurch werden die bereits oben dargelegten Vorteile erzielt.

Bei dem in Fig. 2 gezeigten Ausführungsbeispiel beträgt die Abmessung 43 vorzugsweise zwischen 5 $\mu$m und 100 $\mu$m, die maximale Strukturhöhe 44 der Mikrolinsen 21 zwischen 3 $\mu$m und 50 $\mu$m und die Abmessung 45 der Mikrobilder 22 vorzugsweise zwischen 3 $\mu$m und 50 $\mu$m. Bezüglich der sonstigen Ausgestaltungen des Mehrschichtkörpers 2 wird auf die Ausführungen zu dem Mehrschichtkörper 1 nach Fig. 1a bis Fig. 1f verwiesen.

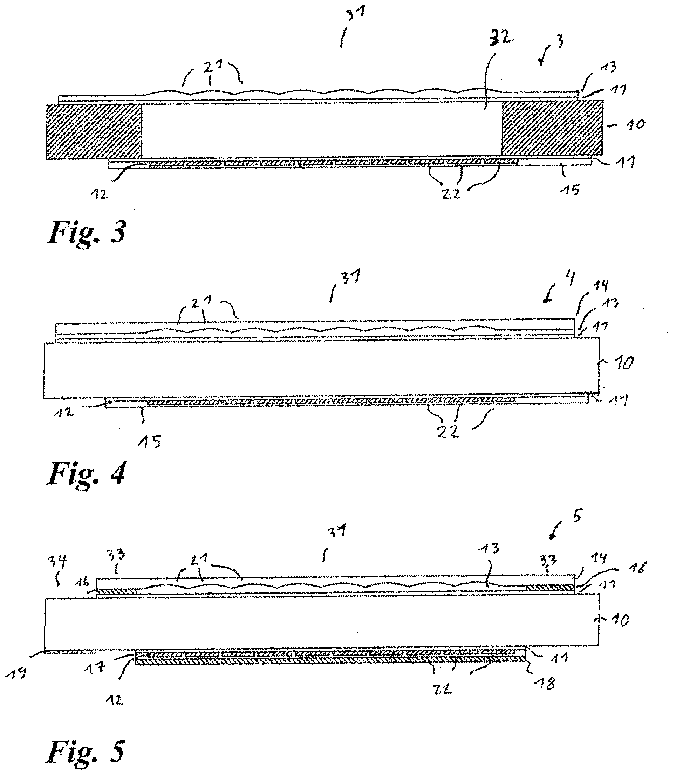

Fig. 3 zeigt einen Mehrschichtkörper 3, welcher eine Banknote darstellt. Der Mehrschichtkörper 3 weist in dem Bereich 31 die Trägerschicht 10, die Kleberschicht 11, die Dekorschicht 12 mit den Mikrobildern 22 und die transparente Schicht 13 mit den Mikrolinsen 21 auf. Die transparente Schicht 13 kann dabei integral mit der Trägerschicht 10 verknüpft sein, das heißt dass die Mikrolinsen 21 auch direkt als Oberflächenrelief in die Trägerschicht 10 ohne Verwendung einer separaten Schicht 13 eingebracht, vorzugsweise eingeprägt sein können. Wird eine separate Schicht 13 auf die Trägerschicht 10 aufgebracht, kann dies in vorteilhafter Weise ein strahlenhärtender Lack sein, in den die Mikrolinsen 21 mittels Prägewalze eingeprägt werden und der Lack anschließend z.B. mit UV-Strahlung ausgehärtet wird. Bezüglich der Ausgestaltung dieser Schichten wird auf die vorstehenden Ausführungen nach Fig. 1a bis Fig. 2 verwiesen. Bei dem Trägersubstrat 10 handelt es sich um das Trägersubstrat der Banknote. In einem Bereich 32 ist das Trägersubstrat 10 transparent ausgebildet. Besteht das Trägersubstrat 10 beispielsweise aus einer Kunststofffolie oder aus einem mehrschichtigen Laminat mehrerer Kunststoffschichten, so sind diese Kunststoffschichten im Bereich 32 für den menschlichen Betrachter transparent ausgeführt. Handelt es sich um ein Papiersubstrat, so weist das Trägersubstrat 10 vorzugsweise in dem Bereich 32 eine fensterförmige Durchbrechung auf, welche dann beidseitig von den in Fig. 3 gezeigten Schichten bedeckt ist. Außerhalb des Bereichs 32 ist das Trägersubstrat 10 vorzugsweise opak ausgeführt, d.h. mit entsprechenden opaken Schichten bedruckt oder mit einer entsprechend eingefärbten Schicht versehen. Auf das Trägersubstrat 10 wird nun auf die Vorderseite ein Folienelement mit den Schichten 11 und 13 appliziert und auf die Rückseite ein Folienelement mit den Schichten 11, 12 und einer Schicht 15 appliziert. Bei der Schicht 15 handelt es sich um eine optionale Schutzlackschicht. Die Applizierung dieser Folienelemente auf das Trägersubstrat 10 kann mittels einer der oben beschriebenen Verfahren, beispielsweise mittels Transfer der Übertragungslage einer Transferfolie oder Auflaminieren einer Laminierfolie auf das Trägersubstrat 10, durchgeführt werden.

Wie in Fig. 3 dargestellt, sind die auf dem Trägersubstrat 10 applizierten Folienelemente hierbei besonders dünn ausgebildet, da das Trägersubstrat hier vorteilhafterweise als zusätzliche Distanzschicht für die Ausbildung des ersten optisch variablen Effekts verwendet wird und somit die Schichtdicke der Schicht 13 besonders dünn gewählt werden kann.

Im Weiteren ist es hier auch möglich, dass die Dekorschicht 12 nicht Teil eines auf das Trägersubstrat 10 applizierten Folienelements ist, sondern dass die Dekorschicht 12 mittels eines Druckverfahrens direkt auf das Trägersubstrat 10 aufgebracht wird.

Durch den Mehrschichtkörper 3 werden die bereits oben beschriebenen Vorteile erzielt.

Fig. 4 zeigt einen Mehrschichtkörper 4, welcher eine Abwandlung des Mehrschichtkörpers 3 nach Fig. 3 darstellt. Der Mehrschichtkörper 4 weist das Trägersubstrat 10, die Kleberschichten 11, die Dekorschicht 12 mit den Mikrobildern 22, die transparente Schicht 13 mit den Mikrolinsen 21 und die Schutzlackschicht 15 auf. Der Mehrschichtkörper 4 ist wie der Mehrschichtkörper 3 nach Fig. 3 ausgestaltet mit dem Unterschied, dass das Trägersubstrat 10 vollständig transparent ausgebildet ist und dass oberhalb der transparenten Schicht 13 eine Replizierlackschicht 14 angeordnet ist, deren Brechungsindex sich von dem Brechungsindex des Materials der Schicht 13 unterscheidet. Das auf die Vorderseite des Trägersubstrats 10 aufgebrachte Folienelement wird hierbei vorzugsweise wie folgt hergestellt:

Auf eine optionale Trägerschicht und Ablöseschicht (im Fall einer Transferfolie) wird die Replizierlackschicht 14 aufgebracht und in die Replizierlackschicht 14 ein dem Mikrolinsenraster mit den Mikrolinsen 21 entsprechendes Oberflächen-Relief eingeprägt. Anschließend wird dieses Oberflächen-Relief mit einer weiteren Lackschicht, der Schicht 13, verfüllt und sodann die weiteren Schichten, insbesondere die Kleberschicht 11, aufgebracht. Anschließend wird das Folienelement auf das Trägersubstrat 10 appliziert. Die Ausführung nach Fig. 4 hat hier den weiteren Vorteil, dass die Oberflächenstruktur der Mikrolinsen 21 nicht in der Vorderseite, d.h. die obere Oberfläche des Mehrschichtkörpers, abgeformt ist und damit nicht mittels Kontaktkopie reproduziert werden kann. Weiter werden die Mikrolinsen so durch die Schicht 14 vor mechanischer Abnutzung, beispielsweise Verkratzungen, geschützt, so dass sich die Beständigkeit des Mehrschichtkörpers verbessert.

Fig. 5 zeigt einen Mehrschichtkörper 5, welcher eine weitere Variation des Mehrschichtkörpers 3 und des Mehrschichtkörpers 4 nach Fig. 3 bzw. Fig. 4 darstellt. Der Mehrschichtkörper 5 weist das Trägersubstrat 10, die Schicht 11, die Dekorschicht 12 mit den Mikrobildern 22, die Schicht 13 mit den Mikrolinsen 21 und die Schicht 14 auf. Der Mehrschichtkörper 5 ist wie der Mehrschichtkörper 4 nach Fig. 4 ausgebildet mit dem Unterschied, dass das auf die Vorderseite des Trägersubstrats 10 applizierte Folienelement weiter ein Sicherheitselement 16, das auf die Unterseite des Folienkörpers applizierte Folienelement ein Sicherheitselement 18 und eine Deckschicht 17 aufweist und die Unterseite des Trägersubstrats 10 mit einem Aufdruck 9 versehen ist.

Die Deckschicht 17 wird von einer opaken Schicht gebildet, welche die optische Wirkung der Dekorschicht 12 und die optische Wirkung des Sicherheitselements 18 voneinander entkoppelt. Auf diese Schicht könnte auch verzichtet werden. Die Sicherheitselemente 16 und 18 bestehen jeweils aus ein oder mehreren Schichten, ausgewählt aus der Gruppe Replizierlackschicht mit abgeformtem optisch aktivem Oberflächen-Relief, Reflexionsschicht, Metallschicht, Farblackschicht, Schicht mit optisch aktiven Pigmenten, Flüssigkristallschicht, Volumenhologrammschicht und Dünnfilmschichtsystem. Das Sicherheitselement 18 bildet hierbei vorzugsweise eine zweite optisch variable Information aus, die sich von der in dem Bereich 31 durch die Schichten 13, 15 und 12 generierten ersten optisch variablen Information unterscheidet. Bei Betrachtung von der Vorderseite ist so in dem Bereich 31 der von den Schichten 12 und 13 generierte optisch variable Effekt sichtbar und bei Betrachtung von der Rückseite der durch das Sicherheitselement 18 generierte optisch variable Effekt sichtbar.

Das Sicherheitselement 16 kann wie das Sicherheitselement 18 ausgestaltet sein. Das Sicherheitselement 16 generiert bei Betrachtung von der Vorderseite somit in einem Bereich 33, in dem es in dem mit der Vorderseite des Trägersubstrats 10 applizierten Folienelement vorgesehen ist, einen entsprechenden, vorzugsweise optisch variablen Eindruck. Im Weiteren ist das Sicherheitsmerkmal 16 passergenau zu dem Sicherheitselement 18 angeordnet. Bei Durchlicht-Betrachtung ergänzen sich die Sicherheitselemente 16 und 18 zu einem weiteren Sicherheitselement, bilden beispielsweise sich ergänzende Darstellungen, die sich bei Durchlicht-Betrachtung beispielsweise zu einem Gesamtmotiv vereinen. Teil dieses Gesamtmotivs ist weiter der Aufdruck 19, der ebenfalls passergenau zu den Sicherheitselementen 16 und 18 angeordnet ist. Bei Betrachtung von der Vorder- und Rückseite im Auflicht zeigt sich damit im Bereich 33 vorzugsweise der von dem Sicherheitselement 16 generierte optisch variable Effekt und bei Betrachtung im Durchlicht zeigt sich in den Bereichen 31, 33 und 34 der von dem Aufdruck 19, dem Sicherheitselement 16 und dem Sicherheitselement 18 bereit gestellte "Wasserzeichen-Effekt", welcher durch die passergenaue Anordnung der Schichten der Sicherheitselemente 16 und 18 sowie des Aufdrucks 19 zueinander bestimmt wird.

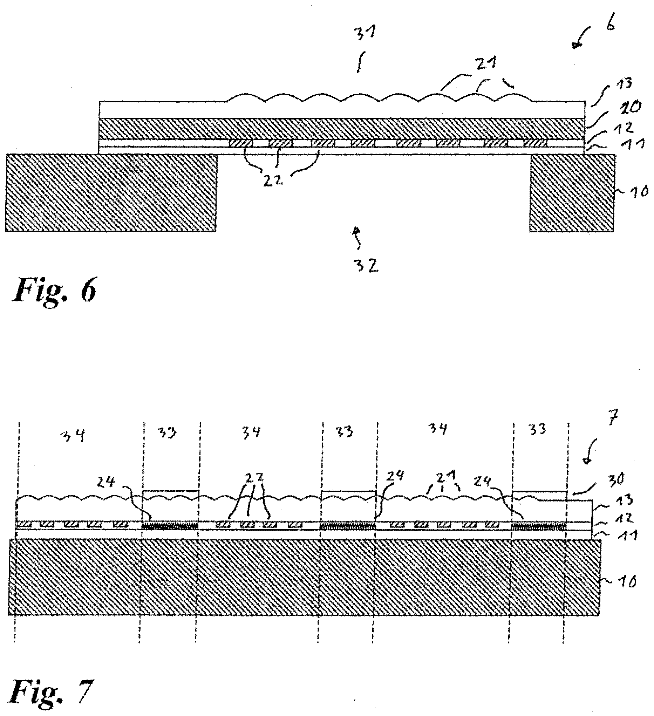

Fig. 6 zeigt einen Mehrschichtkörper 6 mit dem Trägersubstrat 10, der Kleberschicht 11, der Dekorschicht 12 mit den in dem Bereich 31 angeordneten Mikrobildern 22 und der transparenten Schicht 13 mit den in dem Bereich 31 angeordneten Mikrolinsen 21. Die vorgenannten Schichten sind wie die gleichnamigen Schichten des Mehrschichtkörpers 1 und 2 nach Fig. 1a bis Fig. 2 ausgebildet mit dem Unterschied, dass in dem Bereich 31 zusätzlich eine fensterförmige Durchbrechung in dem Trägersubstrat 10 vorgesehen ist. Bezüglich der Ausgestaltung dieser Schichten wird so auf die vorstehenden Ausführungen verwiesen. Im Weiteren ist zwischen der Dekorschicht 12 und der transparenten Schicht 13 eine transluzente Schicht 20 angeordnet. Die transluzente Schicht 20 besteht vorzugsweise aus einer eingefärbten Lackschicht und weist vorzugsweise eine Schichtdicke zwischen 1 $\mu m$ und 30 $\mu m$ auf.

Im weiteren ist die Dekorschicht so ausgebildet, dass sich die Transparenz der Dekorschicht in den Bildbereichen und den Hintergrundbereichen unterscheidet, die Hintergrundbereiche beispielsweise vollständig transparent ausgestaltet sind und die Bildbereiche opak ausgestaltet sind.

Durch die oben beschriebene Ausgestaltung des Mehrschichtkörpers 6 wird erreicht, dass der optisch variable Effekt, der in dem Bereich 31 durch die Schichten 12 und 13 generiert wird, lediglich in Durchlicht-Betrachtung zum Tragen kommt und in Auflicht-Betrachtung durch die transluzente Schicht 20 und den durch diese bewirkten Streueffekt ausgelöscht wird.

Fig. 7 zeigt einen Mehrschichtkörper 7 mit dem Trägersubstrat 10, der Kleberschicht 11, der Dekorschicht 12 und der transparenten Schicht 13. Diese Schichten sind bis auf folgende Unterschiede wie die gleichnamigen Schichten nach Fig. 1a bis Fig. 2 ausgeführt:

Die Dekorschicht 12 weist in dem Bereich 31 Zonen 34 und 33 auf. In den Zonen 33 ist die Dekorschicht 12 wie oben in Bezug auf Fig. 1 oder Fig. 2 beschrieben ausgestaltet. In den Zonen 33 weist die Dekorschicht 12 eine Replizierlackschicht mit einer optisch aktiven Oberflächenstruktur 24 auf, welche zur Generierung einer weiteren optisch variablen Information vorgesehen ist, die sich von der ersten, in den Zonen 34 generierten optisch variablen Information unterscheidet. Weiter ist in den Zonen 33 eine Lackschicht 30 auf die Oberfläche der transparenten Schicht 13 aufgedruckt. Bei der Lackschicht 30 handelt es sich um eine Lackschicht aus einem Material, dessen Brechungsindex sich um nicht mehr als 0,3 von dem Brechungsindex des Materials der transparenten Schicht unterscheidet. Hierdurch wird bewirkt, dass für den menschlichen Betrachter die optische Wirkung der Mikrolinsen 21 in den Zonen 33 ausgelöscht wird und damit in den Zonen 33 für den menschlichen Betrachter lediglich der durch die optisch aktive Oberflächenstruktur 24 generierte optisch variable Effekt sichtbar wird.

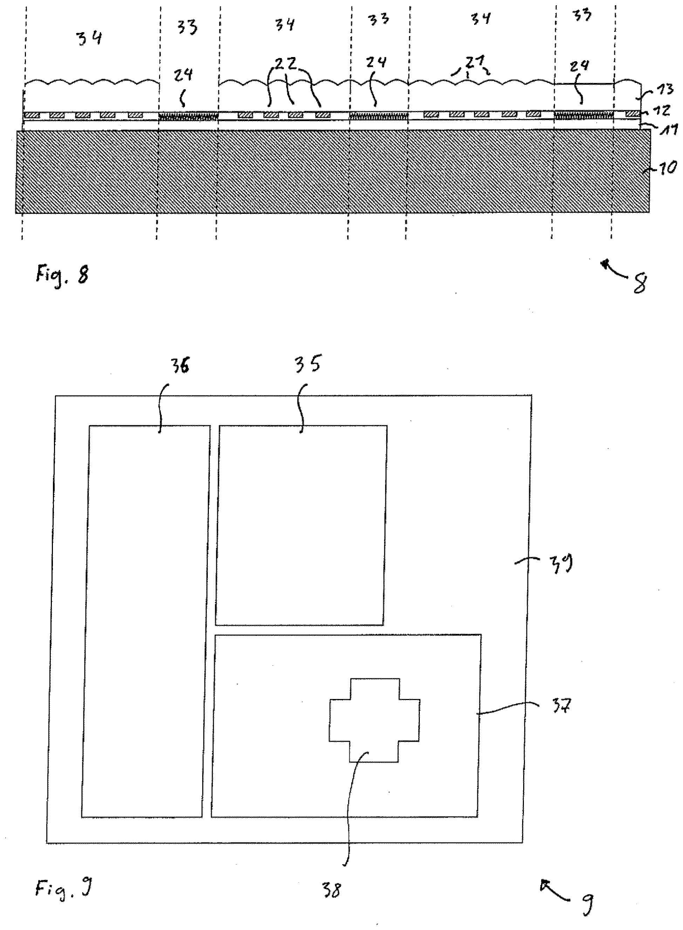

Eine weitere Variante zur Erzielung des durch den Mehrschichtkörper 7 generierten optischen Effekts wird im Folgenden anhand von Fig. 8 erläutert.

Fig. 8 zeigt einen Mehrschichtkörper 8, mit dem Trägersubstrat 10, der Kleberschicht 11, der Dekorschicht 12 und der transparenten Schicht 13. Diese Schichten sind bis auf folgende Unterschiede wie die gleichnamigen Schichten nach Fig. 7 aufgebaut: Anstelle des Auslöschens der optischen Wirkung der Mirkolinsen 21 in den Zonen 33 ist hier zum einen die Variante gezeigt, dass die Schicht 13 im Bereich der Zonen 33 nicht vorgesehen ist. Die Schicht 13 wird somit partiell ausgestaltet, so dass in den Zonen 33 oder in einem Teil der Zonen 33 die Schicht 13 mit den Mikrolinsen 21 nicht vorgesehen ist. Hierdurch kommt der optisch variable Effekt der optisch aktiven Oberflächenstrukturen 24 besonders brilliant in diesen Bereichen 33 zur Geltung, weil keine oder nur eine partielle Überdeckung des optisch variablen Effektes durch andere Schichten gegeben ist. Alternativ hierzu ist es möglich, die Mikrolinsen nur partiell in die Schicht 13 abzuformen. Wie in Fig. 8 gezeigt, sind so in den Zonen 33 die Mikrolinsen nicht abgeformt und beispielsweise, wie in Fig. 8 gezeigt, durch ein ebenes Oberflächenprofil oder ein weitgehend glattes oder ebenes Oberflächenprofil ohne optische Verzerrungsfunktion ersetzt.

Alternativ haben Untersuchungen gezeigt, dass auch bei einem Verzicht auf die Lackschicht 30 oder bei der Vornahme einer der beiden vorhergehenden Maßnahmen der optische Eindruck der Oberflächenstruktur, insbesondere bei Verwendung eines Kinegram®, durch die Linsen nur wenig eingetrübt ist und so ggf. auf die Lackschicht 30 oder auf eine der beiden vorgenannten Alternativen hierzu zur Erzielung des beim Ausführungsbeispiel nach Fig. 7 geschilderten optisch variablen Effekts verzichtet werden kann.

Es ist weiter möglich, dass als Zonen 34 Bereiche mit unterschiedlich ausgebildeten und/oder orientierten Mikrobildraster und Mikrostrukturraster, wie vorher in Fig. 1b, 1c, 1d, 1e dargestellt, sowie Zonen 33 zur Generierung einer weiteren optisch variablen Information benachbart zueinander nebeneinander angeordnet sind.

Benachbart heißt in diesem Zusammenhang, dass jeweils nebeneinander liegende Zonen eine gemeinsame Grenzlinie oder Grenzzone aufweisen. Um vorhandene Herstellungstoleranzen der Positionen der jeweiligen Zonen ausgleichen zu können, ist es möglich, dass jeweils nebeneinander liegende Zonen in einem als Grenzzone ausgebildeten Überlappungsbereich miteinander geringfügig überlappen, wobei die Grenzzone jeweils bevorzugt geringfügig breiter ist als die maximale Herstellungstoleranz ist, beispielsweise zwischen 10 µm und 5 mm breit ist. Grenzzonen können am gesamten Umfang einer Zone vorgesehen sein oder nur an einem Teil des Umfangs, beispielsweise nur im Bereich einer Grenzlinie zu einer benachbarten Zone. Derartige Herstellungstoleranzen können beispielsweise beim Aufbringen der einzelnen Schichten in unterschiedlichen Produktionsschritten, vorzugsweise in einem Rolle-zu-Rolle-Prozess für die Mikrobildraster und/oder der Mikrostrukturraster auftreten, wodurch ein geringer Versatz in der relativen Anordnung der Schichten zueinander entsteht kann.

Fig. 9 zeigt einen Mehrschichtkörper **9** mit den Bereichen 35, 36 und Bereichen 37 und 38. In den Bereichen 35 bis 38 unterscheidet sich das Mikrobildraster und das Mikrostrukturraster jeweils voneinander, insbesondere in einem der Parameter ausgewählt aus der Gruppe Mikrobilderabstand, Mikrostrukturabstand und Ausrichtung der Koordinatenachse, welche von dem Mikrostrukturraster und dem Mikrobildraster aufgespannt sind. Das Mikrobildraster oder das Mikrostrukturraster kann auch in einzelnen Bereichen 35 bis 38 identisch sein, jedoch phasenverschoben zu den jeweils anderen Bereichen. In den Bereichen 37 und 38 sind so beispielsweise die Zonen 21, 22 und 23 gemäß einem Mikrostrukturraster und einem Mikrobildraster angeordnet, bei dem im Bereich 134 die Differenz des Mikrobildabstands und des Mikrostrukturabstands positiv und in dem Bereich 135 negativ ist. Hierdurch wird beispielsweise eine gegenläufige Bewegung des sich beim Kippen zeigenden Motivs in den Bereichen 37 und 38 bewirkt.

Zusätzlich ist eine vorteilhafte Kombination von Zonen 34 mit optisch variablen Informationen mit benachbarten Zonen 33 mit einer dazu kontrastierenden optisch variablen Information möglich, beispielsweise als Einzelmotive innerhalb eines Gesamtmotivs, damit die Zonen 33 als kontrastierende optische Referenz für die optisch variable Information in den Zonen 34 dienen können. Beispielsweise können das Bewegungseffekte in den Bereichen 35 bis 38 sein und ein umgebender Bereich 39 ohne Bewegungseffekt oder ein Bewegungseffekt im Bereich 38 mit einem diesen umgebenden oder daran angrenzenden Bereich 37 ohne Bewegungseffekt, beispielsweise mit einem Hologramm und/oder mit optisch variablen Pigmenten oder aber jeweils gegenläufige Bewegungseffekte in den Bereichen 35 bis 38. Kontrastierende optisch variable Informationen können beispielweise auch erzeugt werden, indem in einem oder mehreren Bereichen 35 bis 38 ein Mikrostrukturraster über einem Mikrobildraster oder über anderen optisch variablen Motiven vorgesehen ist und in anderen, dazu direkt oder indirekt benachbarten Bereichen 35 bis 38 das Mikrostrukturraster entweder ausgelöscht, beispielsweise mit einer Lackschicht mit ähnlichem Brechungsindex, oder nicht vorgesehen ist. Ebenso ist es möglich, in den Bereichen 35 bis 38 optisch variable Informationen benachbart mit optisch statischen Informationen, beispielsweise einfarbigen Bereichen oder mehrfarbigen, nicht optisch variablen Motiven, benachbart zueinander vorzusehen.

## Patentansprüche

1. Mehrschichtkörper (1, 2, 3, 4, 5, 6, 7) als Sicherheitselement zur Sicherung von Sicherheitsdokumenten, zur Produktsicherung oder für Verpackungsanwendungen, mit einer transparenten ersten Schicht (13), in der in einem ersten Bereich (31) eine Vielzahl von Mikrolinsen (21) abgeformt sind, die gemäß eines Mikrolinsenrasters angeordnet sind, und mit einer unterhalb der ersten Schicht (13) und in fester Lage zur ersten Schicht (13) angeordneten zweiten Schicht (12), die eine Vielzahl von Mikrobildern (22) aufweist, die gemäß eines Mikrobildrasters und jeweils in einer zumindest bereichsweisen Überlappung mit einer der Mikrolinsen (21) des Mikrolinsenrasters zur Generierung einer ersten optisch variablen Information angeordnet sind, wobei die Rasterweiten (41, 42) des Mikrobildrasters und des Mikrolinsenrasters jeweils in zumindest einer Raumrichtung kleiner als

300 μm sind, wobei die Mikrobilder (22) jeweils von ein oder mehreren Bildbereichen gebildet sind, die von einem Hintergrundbereich (23) umgeben sind und wobei die zweite Schicht

eine metallische Schicht aufweist, die in dem ersten Bereich in den Bildbereichen vorgesehen und in dem Hintergrundbereich nicht vorgesehen ist,

wobei die zweite Schicht eine Photoresistschicht aufweist, die in dem ersten Bereich in den Bildbereichen vorgesehen und in dem Hintergrundbereich nicht vorgesehen ist, oder umgekehrt, wobei die ein oder mehreren Bildbereiche opak und der Hintergrundbereich transparent ist,

wobei die ein oder mehreren Bildbereiche einerseits und der Hintergrundbereich andererseits unterschiedliche Reflexionseigenschaften besitzen,

wobei die ein oder mehreren Bildbereiche oder der Hintergrundbereich mit einem optisch variablen Element belegt sind, wobei die zweite Schicht (12) eine Replizierlackschicht (122) mit einem in eine Oberfläche der Replizierlackschicht (122) abgeformten Oberflächen-Relief (123) aufweist, und wobei das Mikrolinsenraster und/oder das Mikrobildraster ein zweidimensionales Mikrolinsenraster bzw. Mikrobildraster ist und jeweils zwei oder mehr Mikrolinsen bzw. Mikrobilder in einer ersten Raumrichtung und in einer zweiten Raumrichtung mit einer jeweiligen Rasterweite zwischen 5 μm und 150 μm aufeinander abfolgen.

2. Mehrschichtkörper (3, 4, 5) nach Anspruch 1, wobei die zweite Schicht eine eingefärbte Lackschicht aufweist, die in dem ersten Bereich in den Bildbereichen vorgesehen und in dem Hintergrundbereich nicht vorgesehen ist, oder umgekehrt.

3. Mehrschichtkörper (3, 4, 5) nach einem der Ansprüche 1 oder 2, wobei der Mehrschichtkörper (3, 4, 5) ein Trägersubstrat (10) mit einer Schichtdicke von mehr als 6 μm aufweist, dass das Trägersubstrat (10) in einem zweiten Bereich (32) transparent ausgebildet ist oder eine fensterförmige Durchbrechung aufweist, wobei der zweite Bereich (32) den ersten Bereich (31) überdeckt, und wobei die erste Schicht (13) auf der Vorderseite des Trägersubstrats (10) angeordnet ist und die zweite Schicht (11) auf der Rückseite des Trägersubstrats (10) angeordnet ist, insbesondere wobei der Mehrschichtkörper (3, 4, 5) ein Wertdokument, insbesondere eine Banknote ist und wobei das Trägersubstrat (10) das Trägersubstrat des Wertdokuments bildet und eine Schichtdicke von 30 μm bis 200 μm aufweist und/oder wobei der Mehrschichtkörper (5) im ersten Bereich (31) eine dritte Schicht (18) aufweist, die unterhalb der zweiten Schicht (11) angeordnet ist und die bei Betrachtung des Mehrschichtkörpers (5) von der Rückseite eine zweite optisch variable Information generiert, die für den menschlichen Betrachter bei Betrachtung der Vorderseite des Mehrschichtkörpers nicht sichtbar ist und sich von der ersten optisch variablen Information unterscheidet.

4. Mehrschichtkörper nach einem der Ansprüche 1 oder 2, wobei die ein oder mehreren Bildbereiche und der Hintergrundbereich unterschiedliche Polarisationseigenschaften aufweisen.

5. Mehrschichtkörper nach einem der vorhergehenden Ansprüche, wobei das Mikrolinsenraster und/oder das Mikrobildraster ein eindimensionales Mikrolinsenraster bzw. Mikrobildraster ist und jeweils zwei oder mehr Mikrolinsen bzw. Mikrobilder in einer ersten Raumrichtung mit einer jeweiligen Rasterweite zwischen 5 μm und 300 μm aufeinander abfolgen.

6. Mehrschichtkörper nach einem der vorhergehenden Ansprüche, wobei die Rasterweiten des Mikrobildrasters und Mikrolinsenrasters sich jeweils für benachbarte Mikrobilder und Mikrolinsen um weniger als 10 % voneinander unterscheiden, sich insbesondere zwischen 0,5 und 5 % voneinander unterscheiden.

7. Mehrschichtkörper nach einem der vorhergehenden Ansprüche, wobei das Mikrobildraster und das Mikrolinsenraster gegeneinander zwischen 0,5° und 50° verdreht angeordnet sind.

8. Mehrschichtkörper nach einem der vorhergehenden Ansprüche, wobei **dadurch gekennzeichnet, dass** in dem ersten Bereich die Rasterweite des Mikrolinsenrasters und/oder des Mikrobildrasters und/oder die Verdrehung des Mikrobildrasters und des Mikrolinsenrasters gegeneinander kontinuierlich gemäß einer Parametervariationsfunktion in zumindest einer Raumrichtung variiert sind.

9. Mehrschichtkörper nach einem der vorhergehenden Ansprüche, wobei in einem ersten Teilbereich des ersten Bereichs die Rasterweite des Mikrolinsenrasters, die Rasterweite des Mikrobildrasters und/oder die Verdrehung des Mikrobildrasters und des Mikrolinsenrasters zueinander sich von der Rasterweite des Mikrolinsenrasters, der Rasterweite des Mikrobildrasters bzw. der Verdrehung des Mikrobildrasters und des Mikrolinsenrasters gegeneinander in einem zweiten Teilbereich des ersten Bereichs unterscheidet.

**Claims**

1. Multilayer element (1, 2, 3, 4, 5, 6, 7) as a security element for securing security documents, for product assurance or for packaging applications, having a transparent first layer (13), in which a plurality of microlenses (21) are moulded in a first area (31), which are arranged according to a microlens array, and having a second layer (12) arranged below the first layer (13) and in a fixed position relative to the first layer (13), which has a plurality of micro images (22) that are arranged according to a micro image array and each with at least a partial overlap with one of the microlenses (21) of the microlens array for generating a first piece of visually variable information, wherein the screen rulings (41, 42) of the micro image array and the microlens array are each smaller than 300 $\mu$m in at least one spatial direction,

   wherein the micro images (22) are each formed by one or more image areas, which are surrounded by a background area (23), and wherein the second layer has a metallic layer, which is provided in the first area in the image areas and not in the background area, wherein the second layer has a photoresist layer, which is provided in the first area in the image areas and not in the background area, or vice versa, wherein the one or more image areas are opaque and the background area is transparent, wherein on the one hand the one or more image areas and on the other hand the background area possess different reflective characteristics, wherein the one or more image areas or the background area are covered with a visually variable element, wherein the second layer (12) has a replicating lacquer layer (122) having a surface relief (123) moulded into a surface of the replicating lacquer layer (122), and wherein the microlens array and/or the micro image array is a two-dimensional microlens array or micro image array and in each case two or more microlenses or micro images are in succession to each other in a first spatial direction and in a second spatial direction according to a respective screen ruling between 5 $\mu$m and 150 $\mu$m.

2. Multilayer element (3, 4, 5) according to claim 1, wherein the second layer has a coloured lacquer layer which is provided in the first area in the image areas and is not provided in the background area, or vice versa.

3. Multilayer element (3, 4, 5) according to one of claims 1 or 2,

   wherein the multilayer element (3, 4, 5) has a carrier substrate (10) having a layer thickness greater than 6 $\mu$m, that the carrier substrate (10) is formed transparent in a second area (32) or has a window-shaped opening, wherein the second area (32) covers the first area (31), and wherein the first layer (13) is arranged on the front side of the carrier substrate (10) and the second layer (11) is arranged on the back side of the carrier substrate (10), in particular wherein the multilayer element (3, 4, 5) is a valuable document, in particular a bank note, and wherein the carrier substrate (10) forms the carrier substrate of the valuable document and has a layer thickness of 30 $\mu$m up to 200 $\mu$m and/or wherein in the first area (31) the multilayer element (5) has a third layer (18), which is arranged below the second layer (11) and which generates a second piece of visually variable information when the multilayer element (5) is viewed from the back side, which information is not visible to the human observer when viewed from the front side of the multilayer element and differs from the first piece of visually variable information.

4. Multilayer element according to one of claims 1 or 2, wherein the one or more image areas and the background area have different polarisation characteristics.

5. Multilayer element according to one of the preceding claims, wherein the microlens array and/or the micro image array is a one-dimensional microlens array or micro image array and in each case two or more microlenses or micro images are in succession to each other in a first spatial direction according to a respective screen ruling between 5 $\mu$m and 300 $\mu$m.

6. Multilayer element according to one of the preceding claims, wherein the screen rulings of the micro image array and the microlens array differ from each other by less than 10%, in particular between 0.5 and 5%, for adjacent micro images and microlenses.

**7.** Multilayer element according to one of the preceding claims,
wherein the micro image array and the microlens array are arranged rotated relative to each other by between 0.5° and 50°.

**8.** Multilayer element according to one of the preceding claims,

wherein **characterised in that**,
in the first area the screen ruling of the microlens array and/or the micro image array and/or the rotation of the micro image array and the microlens array relative to each other are continually varied in at least one spatial direction according to a parameter variation function.

**9.** Multilayer element according to one of the preceding claims,
wherein, in a first partial area of the first area, the screen ruling of the microlens array, the screen ruling of the micro image array and/or the rotation of the micro image array and the microlens array relative to each other differs from the screen ruling of the microlens array, the screen ruling of the micro image array or the rotation of the micro image array and the microlens array relative to each other in a second partial area of the first area.

**Revendications**

**1.** Corps multicouche (1, 2, 3, 4, 5, 6, 7) comme élément de sécurité pour la sécurité de documents de sécurité, pour la sécurité du produit ou pour des applications d'emballage, avec une première couche (13) transparente, dans laquelle une pluralité de microlentilles (21) est moulée dans une première zone (31), lesquelles sont agencées selon une trame de microlentille, et avec une deuxième couche (12) agencée en dessous de la première couche (13) et en position fixe par rapport à la première couche (13), laquelle présente une pluralité de microimages (22) qui sont agencées selon une trame de microimage et respectivement dans un chevauchement au moins par endroits avec une des microlentilles (21) de la trame de microlentille pour la génération d'une première information variable optiquement, dans lequel les largeurs de trame (41, 42) de la trame de microimage et de la trame de microlentille respectivement dans au moins un sens spatial sont inférieures à 300 μm, dans lequel les microimages (22) sont formées respectivement par une ou plusieurs zones d'image qui sont entourées par une zone d'arrière-plan (23) et dans lequel la deuxième couche présente une couche métallique qui est prévue dans la première zone dans les zones d'image et n'est pas prévue dans la zone d'arrière-plan,

dans lequel la deuxième couche présente une couche photorésistante qui est prévue dans la première zone dans les zones d'image et n'est pas prévue dans la zone d'arrière-plan, ou inversement,
dans lequel les une ou plusieurs zones d'image sont opaques et la zone d'arrière-plan est transparente,
dans lequel les une ou plusieurs zones d'image d'une part et la zone d'arrière-plan d'autre part possèdent différentes propriétés de réflexion,
dans lequel les une ou plusieurs zones d'image ou la zone d'arrière-plan sont occupées par un élément variable optiquement, dans lequel la deuxième couche (12) présente une couche de vernis de réplication (122) avec un relief de surface (123) moulé dans une surface de la couche de vernis de réplication (122),
et dans lequel la trame de microlentille et/ou la trame de microimage est une trame de microlentille ou trame de microimage en deux dimensions et respectivement deux ou plus microlentilles ou microimages se suivent les unes les autres dans un premier sens spatial et dans un second sens spatial avec une largeur de trame respective entre 5 μm et 150 μm.

**2.** Corps multicouche (3, 4, 5) selon la revendication 1, dans lequel la deuxième couche présente une couche de vernis colorée qui est prévue dans la première zone dans les zones d'image et n'est pas prévue dans la zone d'arrière-plan ou inversement.

**3.** Corps multicouche (3, 4, 5) selon l'une quelconque des revendications 1 ou 2, dans lequel le corps multicouche (3, 4, 5) présente un substrat porteur (10) avec une épaisseur de couche de plus de 6 μm, en ce que le substrat porteur (10) est réalisé de manière transparente dans une seconde zone (32) ou présente une interruption en forme de fenêtre, dans lequel la seconde zone (32) recouvre la première zone (31), et dans lequel la première couche (13) est agencée sur le côté avant du substrat porteur (10) et la deuxième couche (11) est agencée sur le côté arrière du substrat porteur (10), en particulier dans lequel le corps multicouche (3, 4, 5) est un document de valeur, en particulier un billet et dans lequel le substrat porteur (10) forme le substrat porteur du document de valeur et présente une épaisseur de couche de 30 μm à 200 μm et/ou dans lequel le corps multicouche (5) présente dans la première zone (31) une troisième couche (18) qui est agencée en dessous de la deuxième couche (11) et qui génère en cas d'observation du corps multicouche (5) du côté arrière une seconde information variable optiquement qui n'est pas visible pour l'observateur humain en cas d'observation du côté avant du corps multicouche et se distingue de la première information variable optiquement.

4. Corps multicouche selon l'une quelconque des revendications 1 ou 2, dans lequel les une ou plusieurs zones d'image et la zone d'arrière-plan présentent différentes propriétés de polarisation.

5. Corps multicouche selon l'une quelconque des revendications précédentes, dans lequel la trame de microlentille et/ou la trame de microimage est une trame de microlentille ou trame de microimage à une dimension et respectivement deux ou plus microlentilles ou microimages se suivent les unes les autres dans un premier sens spatial avec une largeur de trame respective entre 5 μm et 300 μm.

6. Corps multicouche selon l'une quelconque des revendications précédentes, dans lequel les largeurs de trame de la trame de microimage et de la trame de microlentille se distinguent les unes des autres respectivement pour des microimages et des microlentilles contiguës de moins de 10 %, se distinguent en particulier entre 0,5 et 5 % les unes des autres.

7. Corps multicouche selon l'une quelconque des revendications précédentes, dans lequel la trame de microimage et la trame de microlentille sont agencées tournées l'une par rapport à l'autre entre 0,5° et 50°.

8. Corps multicouche selon l'une quelconque des revendications précédentes,

   dans lequel **caractérisé en ce que** dans la première zone, la largeur de trame de la trame de microlentille et/ou de la trame de microimage et/ou la rotation de la trame de microimage et de la trame de microlentille sont variées l'une par rapport à l'autre en continu selon une fonction de variation de paramètre dans au moins un sens spatial.

9. Corps multicouche selon l'une quelconque des revendications précédentes, dans lequel dans une première zone partielle de la première zone, la largeur de trame de la trame de microlentille, la largeur de trame de la trame de microimage et/ou la rotation de la trame de microimage et de la trame de microlentille l'une par rapport à l'autre se distinguent de la largeur de trame de la trame de microlentille, de la largeur de trame de la trame de microimage ou de la rotation de la trame de microlentille et de la trame de microlentille l'une par rapport à l'autre dans une seconde zone partielle de la première zone.

**Fig. 1a**

**Fig. 2**

*Fig. 1b*

*Fig. 1c*

*Fig. 1e*

*Fig. 1f*

*Fig. 1d*

**Fig. 3**

**Fig. 4**

**Fig. 5**

**Fig. 6**

**Fig. 7**

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1238373 B1
- DE 102007007914 A1
- WO 2005106601 A2
- DE 102007049512 A1
- DE 102006005000 A1